Europäisches Patentamt

European Patent Office

Office européen des brevets

(19)

(11) EP 0 446 540 B1

# (12) FASCICULE DE BREVET EUROPEEN

(45) Date de publication et mention
de la délivrance du brevet:
**10.04.1996 Bulletin 1996/15**

(51) Int Cl.⁶: **H04L 12/56**

(21) Numéro de dépôt: **90401393.5**

(22) Date de dépôt: **23.05.1990**

(54) **Réseau de commutation à trajets multiples et à auto-acheminement pour la commutation de cellules à multiplexage temporel asynchrone**

Selbstleitweglenkendes Mehrwege-Vermittlungsnetzwerk zum Vermitteln von Zellen mit asynchroner Zeitvielfachübermittlung

Self-routing multipath switching network for switching cells in the asynchronous transfer mode

(84) Etats contractants désignés:
**AT BE CH DE ES FR GB IT LI NL SE**

(30) Priorité: **14.03.1990 FR 9003246**

(43) Date de publication de la demande:
**18.09.1991 Bulletin 1991/38**

(73) Titulaire: **ALCATEL N.V.**
**NL-1077 XX Amsterdam (NL)**

(72) Inventeurs:
• **Henrion, Michel André**
**B-1930 Zaventem (BE)**
• **Verhille, Henri**
**B-2200 Borgerhout (BE)**

(74) Mandataire: **Weinmiller, Jürgen et al**
**Lennéstrasse 9**
**Postfach 24**
**D-82336 Feldafing (DE)**

(56) Documents cités:
EP-A- 0 229 299          EP-A- 0 241 152
WO-A-86/03355

• IEEE TRANSACTIONS ON COMMUNICATIONS.
vol. 36, no. 6, juin 1988, NEW YORK US pages
734 - 743; J.S. Turner: "Design of a Broadcast
Packet Switching Network"
• AT & T TECHNICAL JOURNAL. vol. 68, no. 2,
mars 1989, NEW YORK US pages 36 - 50; J.J.
Degan et al.: "FAST PACKET TECHNOLOGY
FOR FUTURE SWITCHES"
• IEEE Pacific Rim Conference on
Communications, Computers and Signal
Processing, June 1st- 2nd, 1989 Victoria,BC,
Canada, pages 620-623,New York ,US;
G.B.Mund et al.:" A 2x2 Switching Element for
Broadband ISDN "

# Description

La présente invention concerne un réseau de commutation à trajets multiples et à auto-acheminement pour la commutation de cellules à multiplexage temporel asynchrone.

Un réseau de commutation, dans sa définition structurelle la plus large comprend des ports d'entrée auxquels sont connectées des liaisons d'entrée, des ports de sortie auxquels sont connectées des liaisons de sortie, des commutateur élémentaires disposés entre ces ports d'entrée et ces ports de sortie, arrangés en un ou plusieurs étages et interconnectés par des mailles. Les ports d'entrée du réseau de commutation sont associés aux entrées de commutateurs élémentaires d'un premier étage, tandis que les ports de sortie sont associés aux sorties de commutateur élémentaires d'un dernier étage. Les sorties des commutateurs élémentaires dudit premier étage sont couplées par des mailles, éventuellement au moyen d'étages intermédiaires de commutateurs élémentaires, aux entrées des commutateurs élémentaires dudit dernier étage. Les mailles, d'une manière générale, comprennent une ou plusieurs liaisons autonomes, connectant chacune une sortie d'un commutateur à une entrée d'une autre commutateur, ou du même.

Un tel réseau de commutation est dit à trajets multiples lorsqu'il offre plus d'un trajet de commutation entre un port d'entrée et un port de sortie quelconques. Dans ce cas, la désignation d'un port d'entrée et d'un port de sortie n'est pas suffisante pour déterminer un trajet allant de l'un à l'autre. Il reste encore un choix à effectuer entre les multiples trajets qu'offre le réseau de commutation entre ce port d'entrée et ce port de sortie.

Un tel réseau est encore dit à auto-acheminement, au sens large du terme, lorsqu'il est tel que la détermination d'un trajet de commutation se fait, dans le réseau de commutation, non seulement à l'aide d'une information d'acheminement contenant la désignation implicite ou explicite d'un port d'entrée et celle d'un port de sortie du réseau de commutation, mais aussi par une décision d'acheminement propre au réseau de commutation.

La faculté d'auto-acheminement introduite dans le réseau de commutation fournit ainsi un moyen autonome pour résoudre le problème d'acheminement que posent les réseaux à trajets multiples, lorsque l'acheminement est seulement défini par la désignation d'un port d'entrée et d'un port de sortie.

Des réseaux de commutation à trajets multiples et à auto-acheminement par connexion sont bien connus dans la commutation de circuits ou la commutation de voies à multiplexage temporel synchrone. Le processus d'acheminement ou d'établissement de connexion y est accompli une fois, au début d'une communication, et détermine un trajet de commutation dont les éléments, initialement libres, sont ensuite occupés par la communication, et deviennent donc indisponibles pour les autres communications. Les trajets de commutation établis causent donc un risque de blocage par manque de voies dans la recherche de tout nouveau trajet de commutation. Le processus de commutation appliqué dans ces réseaux de commutation connus embrasse généralement l'ensemble ou une partie importante du réseau de commutation. Il est par conséquent complexe et requiert un laps de temps relativement important, en terme d'opérations élémentaires de commande pour établir la connexion. Par contre, ce laps de temps est très court, comparé à la durée de la communication et n'est donc pas préjudiciable, en ce qui concerne l'efficacité de communication du réseau de commutation.

Les cellules, aussi appelées paquets, sont des unités d'information numérique comprenant notamment une étiquette contenant une information permettant d'identifier la destination de la cellule, ainsi que des données de communication.

Les cellules sont soit de longueur fixe, soit de longueur variable. Dans le dernier cas, la cellule est transférée sous forme d'une séquence ininterrompue d'un certain nombre de sous-cellules de longueur fixe de taille relativement petite, ce qui permet d'optimiser le transfert interne, le stockage en mémoire ou dans les registres, et les fonctions de traitement au niveau des sous-cellules.

Dans un système de transmission de cellules à multiplexage temporel asynchrone, les cellules de plusieurs communications, transmises sur une même liaison, se suivent dans un ordre quelconque et des cellules relatives à une même communication sont transmises à intervalles irréguliers.

Compte tenu des caractéristiques de la transmission de cellules à multiplexage temporel asynchrone, un réseau de commutation de cellules à multiplexage temporel asynchrone est généralement un réseau de commutation agencé pour commuter individuellement de telles cellules, de telle sorte qu'un trajet de commutation soit recherché pour chacune d'elles, pour l'acheminer d'un port d'entrée du réseau jusqu'à un port de sortie au moins. Dans ce cas, un réseau de commutation "à auto-acheminement par cellule" permet d'effectuer une recherche et une sélection de trajet pour chaque cellule individuelle. En outre, il est aussi communément admis que, dans ce type de réseau, il y a lieu de prévoir, non seulement l'acheminement classique, dit de point à point, d'un port d'entrée à un port de sortie, mais aussi au moins l'acheminement dit de point à multipoint, entre un port d'entrée et plusieurs ports de sortie.

Cependant, un processus d'établissement préalable de connexion, tel que celui que l'on vient d'évoquer pour les réseaux de commutation de circuits ou de voies à multiplexage temporel synchrone, s'il est en principe également applicable à la commutation de cellules à multiplexage temporel asynchrone, présente toutefois un certain nombre d'inconvénients, tel que la complexité de la gestion des débits des connexions établies sur chaque maille interne du réseau et un laps de temps trop important pour établir des connexions de données.

Les réseaux de commutation à trajets multiples et à auto-acheminement par connexion connus dans la commutation de circuits ou la commutation de voies à multiplexage temporel synchrone ne constituent donc pas une solution optimale pour la commutation de cellules à multiplexage temporel asynchrone.

La technique s'est donc tournée vers des réseaux de commutation spécifiques dans lesquels le processus de commutation y compris la recherche de trajet a lieu étage par étage pour chaque cellule individuelle, donc sans établissement et marquage préalable de connexion au début de la communication.

On trouvera la description d'exemples de réseau de commutation de ce type dans les articles "Fast Packet Technology for Future Switches" de J.J. Degan et al, AT & T Technical Journal, n°2 Mars/Avril 1989, et "A 2x2 Switching Element for Broadband ISDN", de G.B. Mund IEEE Pacific Rim Conference on Communications, Computers and signal Processing", 1-2 Juin 1989, et plus particulièrement dans l'article "Design of a Broadcast Packet Network", de J.S. Turner, publié dans les "Proceedings of IEEE INFOCOM'86", Fifth Annual Conference, "Computers and Communications Integration Design, Analysis, Management", pages 668 à 673.

Un réseau tel que celui de ce dernier document comprend, de ports d'entrée à ports de sortie, des étages spécialisés dans la multiplication de cellules nécessaire pour les communications de point à multipoint, des étages spécialisés dans le brassage des cellules, pour mélanger les cellules provenant des différentes entrées et obtenir des débits moyens par maille égaux et stables, autant qu'il est statistiquement possible, et des étages spécialisés dans l'acheminement sélectif vers les ports de sortie. Ce réseau est construit à l'aide de commutateurs élémentaires à deux entrées et deux sorties seulement. Une petite mémoire tampon pour deux cellules est prévue à chaque entrée du commutateur élémentaire. Lorsqu'une cellule doit emprunter une sortie qui n'est pas disponible, parce qu'une autre cellule est alors retransmise sur cette sortie, l'entrée peut conserver temporairement la cellule non retransmise.

Un tel réseau possède des inconvénients et limitations tels que, notamment :

- un grand nombre d'étages, lorsque le nombre de ports d'entrée et de sortie est élevé,
- une efficacité limitée par la rétention des cellules aux entrées en cas d'occupation des sorties,
- une certaine difficulté dans la réalisation d'extensions, due entre autres au grand nombre d'étages,
- l'existence d'étages de multiplication de cellules, causant un coût additionnel,
- une certaine sensibilité au processus d'arrivée des cellules sur chaque port d'entrée, qui n'est pas complètement maîtrisée par l'emploi d'étages de brassage et qui affecte donc les performances du réseau de commutation, etc.

La présente invention a pour objet un réseau de commutation de cellules à multiplexage temporel asynchrone à auto-acheminement par cellule ne souffrant pas, ou tout au moins ne souffrant que dans une bien plus faible mesure, des inconvénients et limitations sus-mentionnés.

Le réseau de commutation de la présente invention se caractérise en ce que :

- chaque commutateur d'un étage au moins du réseau possède au moins trois sorties,
- ces sorties sont arrangées en groupes de sorties dits groupes d'acheminement,
- un groupe de sorties comprend une ou plusieurs sorties déterminées,
- en fonction d'informations d'acheminement associées à une cellule de longueur fixe ou variable reçue sur l'une quelconque de ses entrées, le commutateur est agencé pour identifier un ensemble comprenant un ou plusieurs desdits groupes de sorties, une copie de la cellule étant transférée vers chacun des groupes de sorties identifiés,
- le commutateur est agencé pour transférer ladite cellule reçue, sur une sortie sélectionnée parmi les sorties du groupe unique dudit ensemble, ou des sorties, une par groupe dudit ensemble, chacune sélectionnée parmi les sorties du groupe auquel elle appartient.

Ce réseau est donc composé, dans un de ses étages au moins, de commutateurs élémentaires qui, par la constitution de groupes de sorties déterminées, entre lesquelles à chaque fois une sortie est sélectionnée, procurent non seulement un acheminement sélectif, mais apportent aussi un brassage des cellules par répartition de celles-ci sur les différentes sorties d'un groupe d'acheminement. De plus, l'acheminement possible sur une sortie de chacun de plusieurs groupes réalise la multiplication de cellules nécessaires dans le cas d'acheminement de point à multipoint. Ainsi, comme il apparaîtra plus loin, un tel commutateur se prête à la réalisation de réseaux de commutation intégrés dans lesquels la spécialisation de parties du réseau de commutation disparaît. Plus le commutateur élémentaire comprend de sorties par groupe, mieux se réalise le brassage, car plus grand est le nombre de trajets offerts à une cellule, ce qui tend également à réduire le blocage par manque de sortie disponible, ou à augmenter l'efficacité d'acheminement du commutateur élémentaire et donc de l'ensemble de réseau de commutation. De même, le commutateur élémentaire est alors moins sensible au processus d'arrivée des cellules, puisque les cellules d'une même entrée sont acheminées par une multiplicité de trajets différents à chaque étage.

Dans un réseau de commutation à plusieurs étages, on pourra prévoir que les commutateurs élémentaires de deux étages au moins possèdent les caractéristiques indiquées ; l'arrangement des sorties en groupes n'est alors pas nécessairement le même dans chacun des ces deux étages au moins et les commutateurs de chacun de ces étages sont agencés pour détenir chacun des paramètres d'acheminement propres dérivés d'une donnée de position.

De telles dispositions permettront de tenir compte de l'emplacement respectif des commutateurs élémentaires, dans le réseau de commutation, dans l'arrangement de leurs sorties en groupes et notamment du fait que le maillage entre des paires d'étages successifs n'est pas nécessairement le même.

Selon une autre caractéristique de l'invention, lesdites informations d'acheminement sont interprétées dans chaque étage pour déterminer le mode de transfert d'une cellule reçue vers les sorties du commutateur élémentaire, et ladite interprétation s'effectue en fonction desdits paramètres d'acheminement dérivés de sa position.

Ces dispositions permettent d'utiliser le même type de commutateur dans les différents étages d'un réseau de commutation et d'employer un unique ensemble d'informations d'acheminement dans une cellule et néanmoins d'obtenir différents modes de transfert de la cellule dans les différents étages du réseau de commutation, ce qui apporte une grande souplesse dans l'emploi des différents modes d'acheminement pour transférer une cellule à travers le réseau de commutation selon une variété de séquences de transfert possible.

Dans un mode d'application particulièrement avantageux, les commutateurs de certains étages du réseau au moins comprennent des moyens pour interpréter des informations d'acheminement, contenues dans une étiquette d'acheminement d'une cellule, qui comprennent un code de commande d'acheminement (RCC) définissant la séquence de transfert requise pour la cellule, une adresse de port de sortie (RCA), pour un acheminement de point à point, et/ou d'un numéro de référence interne d'arbre de diffusion (IRN), pour un acheminement de point à multipoint.

Les commutateurs considérés, interprétant ledit code de commande d'acheminement en fonction desdits paramètres d'acheminement dérivés de sa position, sont prévus pour mettre en oeuvre en conséquence un mode d'acheminement qui peut être, entre autres, un acheminement de point à point ou un acheminement de point à multipoint.

L'invention comprend le cas où les commutateurs élémentaires de tous les étages sont symétriques, ayant le même nombre d'entrées et de sorties, et où le réseau de commutation est par suite également symétrique, ayant le même nombre de ports d'entrée et de ports de sortie.

Selon une autre caractéristique de l'invention, les commutateurs élémentaires d'un étage au moins peuvent être dissymétriques et réaliser chacun une expansion de trafic entrant, réduisant la charge de trafic de cellules des sorties de ces commutateurs par rapport à leurs entrées.

De telles dispositions permettent de réduire la charge des sorties des commutateurs et donc la rétention des cellules ou leur perte dans les commutateurs élémentaires, ou les besoins correspondants en mémoire tampon dans ces commutateurs élémentaires.

Inversement, les commutateurs élémentaires d'un étage au moins peuvent être dissymétriques et réaliser chacun une concentration du trafic sortant en augmentant la charge de trafic de cellules des sorties de ces commutateurs par rapport à leurs entrées.

Chacun de ces deux types d'utilisation de commutateurs élémentaires dissymétriques dans un étage au moins permet de réaliser des réseaux de commutation dissymétriques, c'est-à-dire dont les nombres de ports d'entrée et de ports de sortie sont différents, dans le premier cas pour ventiler le trafic sur un plus grand nombre de ports de sortie et dans le second cas pour concentrer le trafic sur un plus petit nombre de ports de sortie.

En outre, l'utilisation conjuguée d'étages dissymétriques, mais de sens différents, dans un même réseau de commutation est également possible. En particulier, il est même possible de réaliser un réseau de commutation symétrique, ayant le même nombre de ports d'entrée et de ports de sortie, dans lequel un des premiers étages au moins est dissymétrique et réalise une expansion de trafic et un des derniers étages au moins est dissymétrique et réalise une concentration de trafic qui compense l'expansion préalable. On obtient alors, entre ces deux étages dissymétriques une réduction de la charge de trafic des mailles internes du réseau de commutation avec les avantages mentionnés plus haut.

L'invention a également pour objet un réseau de commutation dans lequel les commutateurs de certains des étages aux moins acheminent des cellules appartenant à deux courants de trafic opposés, et dans lequel, dans chacun de ces commutateurs dits commutateurs bidirectionnels, les entrées sont réparties en deux ensembles d'entrées et les sorties en deux ensembles de sorties, un courant de trafic étant normalement acheminé d'un premier ensemble d'entrées à un premier ensemble de sorties et l'autre courant de trafic d'un deuxième ensemble d'entrées à un deuxième ensemble de sorties ; l'interprétation des données d'acheminement dans le commutateur élémentaire tient également compte de l'ensemble d'entrées auquel elles appartiennent pour déterminer si l'acheminement doit être "normal", c'est-à-dire vers l'ensemble de sorties associé (même courant de trafic) ou bien "réfléchi", c'est-à-dire vers l'autre ensemble de sorties (courant de trafic opposé).

L'invention s'étend aussi toutefois au cas où les commutateurs élémentaires de tous les étages du réseau de commutation sont unidirectionnels, acheminant des cellules appartenant à un seul courant de trafic acheminés des entrées de chacun de ces commutateurs élémentaires à leurs sorties.

Selon une forme de réalisation de l'invention, le réseau de connexion comprend trois étages unidirectionnels au moins, chaque commutateur d'un étage, sauf le dernier, étant connecté par une ou plusieurs mailles à chaque commutateur de l'étage suivant et chaque commutateur d'un étage, sauf le premier, étant connecté par une ou plusieurs mailles à chaque commutateur de l'étage précédent.

Selon une autre forme de réalisation de l'invention, le réseau de commutation comprend au moins une unité de sélection d'entrée et au moins une unité de sélection de sortie, formées chacune de commutateurs élémentaires agencés en deux étages au moins et dans chacune desquelles chaque commutateur d'un étage, sauf le dernier, est connecté par une ou plusieurs mailles à chaque commutateur de l'étage suivant et chaque commutateur d'un étage, sauf le premier, est connecté par une ou plusieurs mailles à chaque commutateur de l'étage précédent, les unités de sélection d'entrée étant disposées en tandem avec les unités de sélection de sortie, les ports d'entrée étant connectés aux entrées des unités de sélection d'entrée et les ports de sortie aux sorties des unités de sélection de sortie.

Dans cette dernière forme de réalisation, une seule unité de sélection d'entrée peut être connectée directement à une seule unité de sélection de sortie, par brassage entre les sorties de la première et les entrées de la seconde.

Dans le cas de plusieurs unités de sélection d'entrée et de sortie, selon l'invention, le réseau de commutation peut comprendre en outre des unités de sélection dites plans de sélection connectant chacune des sorties d'unité de sélection d'entrée à des entrées d'unité de sélection de sortie.

Selon une autre caractéristique de l'invention, dans les commutateurs élémentaires d'un étage au moins, l'un desdits groupes de sorties d'un commutateur élémentaire comprend toutes les sorties du commutateur élémentaire, dans le cas d'un commutateur unidirectionnel, ou bien toutes les sorties de l'un des deux ensembles de sorties, pc une direction de transfert donnée, dans le cas d'un commutateur bidirectionnel, pour une distribution générale du trafic entrant sur toutes les sorties de ce commutateur élémentaire, dans la direction de transfert entrante.

Selon une autre forme de réalisation de l'invention, le réseau de commutation est configuré en réseau replié extensible, possédant au moins deux étages dont l'un au moins est bidirectionnel, les ports d'entrée étant connectés aux entrées dudit premier ensemble d'entrées des commutateurs élémentaires d'un premier étage et les ports de sortie étant connectés aux sorties dudit deuxième ensemble de sorties de ces mêmes commutateurs élémentaires du premier étage, lorsque celui-ci est bidirectionnel, le dernier étage étant composé de commutateurs unidirectionnels qui acheminent un courant de trafic entrant vers les commutateurs de l'étage précédent, réalisant ainsi une réflexion de trafic.

Lorsque le premier étage n'est pas composé de commutateurs bidirectionnels, mais de deux ensembles homologues de commutateurs unidirectionnels (un pour chaque direction de transfert), les ports d'entrée sont connectés aux entrées des commutateurs entrants et les ports de sortie aux sorties des commutateurs sortants.

Selon cette dernière forme de réalisation, le réseau de commutation replié comprend deux étages au moins dont l'un au moins est birectionnel et chaque commutateur d'un étage, sauf le dernier, est connecté par une ou plusieurs mailles à chaque commutateur de l'étage suivant et chaque commutateur d'un étage, sauf le premier, est connecté par une ou plusieurs mailles à chaque commutateur de l'étage précédent.

Selon une alternative de cette dernière forme de réalisation, le réseau de commutation replié comprend trois étages au moins et les deux premiers étages au moins sont constitués d'unités de sélection d'entrée et de sortie formées chacune de commutateurs élémentaires agencés en deux étages au moins et dans chacune desquelles chaque commutateur d'un étage, sauf le dernier, est connecté par une ou plusieurs mailles à chaque commutateur de l'étage suivant et chaque commutateur d'un étage, sauf le premier, est connecté par une ou plusieurs mailles à chaque commutateur de l'étage précédent.

Dans ce dernier cas, pour réaliser des réseaux de commutation de grande capacité qui soient extensibles en nombre d'étages, lesdites unités de sélection d'entrée et de sortie peuvent être interconnectées par un certain nombre d'unités de sélection dites plans de sélection repliés, chacun comprenant un arrangement d'un ou plusieurs étages selon la capacité requise.

Ces différents types de réseaux de commutation repliés possèdent au moins un étage bidirectionnel offrent la propriété avantageuse d'être extensibles en nombre d'étages, en fonction de la capacité requise en nombre de ports du réseau, ceci sans nécessiter de modifications de câblage entre étages. En effet, tout étage bidirectionnel peut temporairement constituer le dernier étage équipé d'une configuration intermédiaire grâce à sa propriété de réflexion possible du trafic de la direction de transfert entrante vers la direction de transfert sortante.

Dans les dernières formes de réalisation envisagées, avantageusement, le ou les premiers étages du réseau de commutation effectuent une distribution générale du trafic entrant sur l'ensemble des trajets possibles, c'est-à-dire sur toutes les mailles, entre ces premiers étages, réalisant ainsi un brassage des cellules reçues sur les ports d'entrée sur une multiplicité de trajets. Dans un commutateur élémentaire unidirectionnel d'un tel étage, le groupe d'acheminement unique comprend donc toutes les sorties du commutateur ; dans un commutateur élémentaire bidirectionnel d'un tel étage, l'ensemble des sorties dans la direction de transfert entrante constitue le groupe d'acheminement unique par lequel le trafic entrant est distribué. Afin de réaliser un tel brassage de trafic entrant, selon l'invention, chaque cellule doit pouvoir choisir n'importe laquelle des sorties disponibles dans un tel groupe d'acheminement de distribution.

Alors, avantageusement, les commutateurs élémentaires d'un ou plusieurs des premiers étages du réseau de commutation sont agencés pour que, lorsque les données d'acheminement spécifient un transfert de point à point et/ou un transfert de point à multipoint, et compte tenu de ladite donnée de position, il soit procédé à la distribution générale du trafic entrant dans le ou les premiers étages.

Avantageusement encore, la sélection de l'une des sorties d'un groupe s'effectue de manière à équilibrer la charge de cellules sur les différentes sorties de ce groupe.

Avantageusement encore, ladite sélection s'effectuant de manière à distribuer la charge de cellules sur les différentes sorties d'un groupe est basée sur un processus de distribution quasi ou pseudo-aléatoire visant à une décorrélation entre les flux de cellules sur les entrées et les flux de cellules sur les sorties du commutateur élémentaire.

La distribution quasi ou pseudo-aléatoire est effectuée lors de la sélection d'une sortie parmi les différentes sorties appartenant au groupe d'acheminement sélectionné. Ce mécanisme peut intervenir avant l'inscription des identités de cellules en files d'attente qui sont alors individuellement affectées aux sorties. De plus, les deux mécanismes précédemment décrits, équilibrage de charge et distribution aléatoire, peuvent être avantageusement combinés.

Les réseaux de commutation à trajets multiples et à auto-acheminement conformes à l'invention présentent également les caractéristiques suivantes :

- L'utilisation conjuguée d'une multiplicité de chemins pour transférer les différentes cellules d'une communication vers le ou les ports de sortie concernés et de commutateurs élémentaires effectuant une mémorisation des cellules durant un temps non déterminé, a pour conséquence d'acheminer ces cellules vers le ou les ports de sortie avec un temps de transfert variable susceptible de modifier l'ordre des cellules successives. Cette caractéristique implique l'introduction de circuits de rétablissement d'ordre des cellules au niveau de chaque port de sortie du réseau de commutation.
- Le brassage du trafic entrant des cellules sur une multiplicité de chemins possibles dans les premiers étages de distribution fournit la propriété caractéristique que le débit des liaisons internes de tels réseaux de commutation n'est plus conditionné par le débit des liaisons de transmission externes qui lui sont connectées, ni même par le débit des services transmis sur ces liaisons externes. En effet, le principe de distribution par une multiplicité de chemins à l'intérieur du réseau permet de répartir le flux de cellules entrant d'une liaison externe à débit élevé sur plusieurs ports d'entrée du réseau de commutation à débit moins élevé ; par exemple, une liaison externe à 2,4 Gbit/s peut être connectée sur 16 ports d'entrée à 150 Mbit/s. AprèS transfert des cellules dans le réseau de commutation sur l'ensemble des chemins possibles, les cellules destinées à une liaison externe sortante au même débit de 2,4 Gbit/s sont acheminées vers un groupe de 16 ports de sortie à 150 Mbit/s où s'effectue le rétablissement de l'ordre des cellules et le muultiplexage asynchrone sur la liaison sortante à 2,4 Gbit/s.

Un raisonnement analogue montre qu'un service qui nécessiterait un débit de cellules équivalant à 200 Mbit/s peut être transféré dans le réseau de commutation sur une multiplicité de trajets, chacun correspondant à une liaison interne à 150 Mbit/s

- Le brassage du trafic entrant dans les premiers étages de distribution a également pour conséquence caractéristique de réaliser un moyennage de la charge des liaisons externes sur les commutateurs des étages internes du réseau de commutation. Il est alors possible, par exemple, d'équiper un nombre variable de plans de sélection en fonction de la charge de trafic moyenne sur l'ensemble des liaisons externes de l'unité de sélection la plus chargée en trafic.
- En ce qui concerne les transferts de point à multipoint selon des arbres de diffusion préétablis, la multiplicité de trajets possibles pour transférer une cellule à travers le réseau de commutation à trajets multiples et à auto-acheminement requiert une organisation caractéristique du contenu des mémoires d'arbres de diffusion des commutateurs élémentaires des différents étages. Selon l'invention, il est possible de définir les points de branchement correspondant de telle sorte qu'aucune copie inutile ne soit générée à un étage quelconque, ce qui évite toute surcharge interne des mailles internes entre étages.

Les différents objets et caractéristiques de l'invention seront exposés de façon plus détaillée dans le cours de la description qui va suivre d'un exemple de réalisation de l'invention, fournie à titre non limitatif, en se reportant aux figures annexées qui représentent :

- la figure 1, le diagramme connu des circuits d'un exemple de commutateur élémentaire ISE employé dans le réseau de commutation de la présente invention,
- la figure 2, le format d'une cellule, prévue pour la mise en oeuvre de la présente invention,
- la figure 3, le diagramme d'un mode d'application du commutateur de la figure 1, pour l'acheminement des cellules dans deux direction opposées,

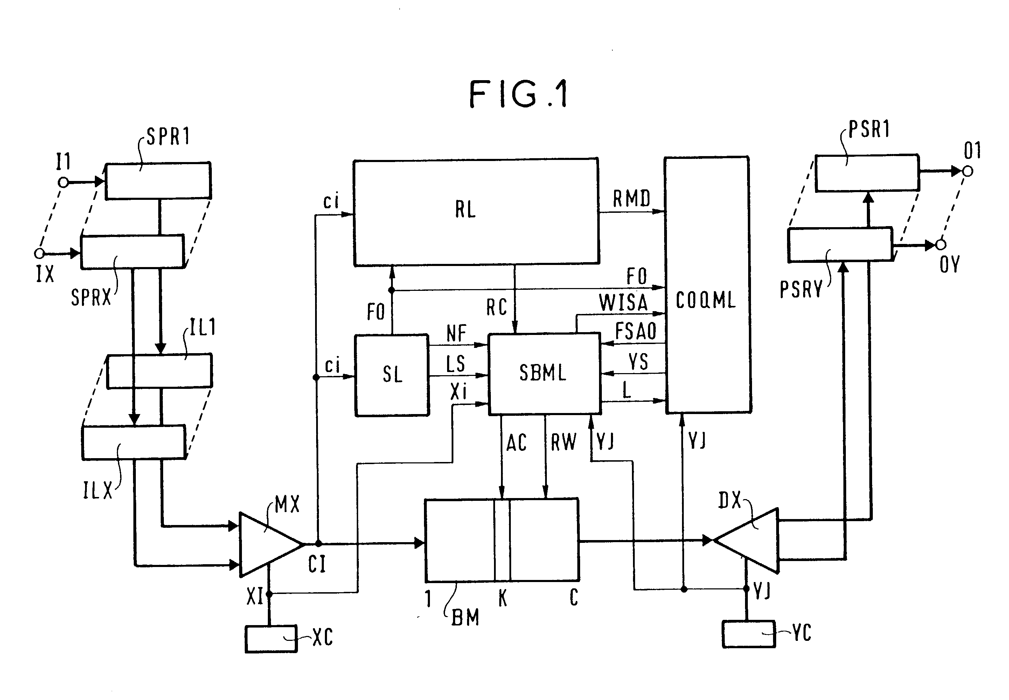

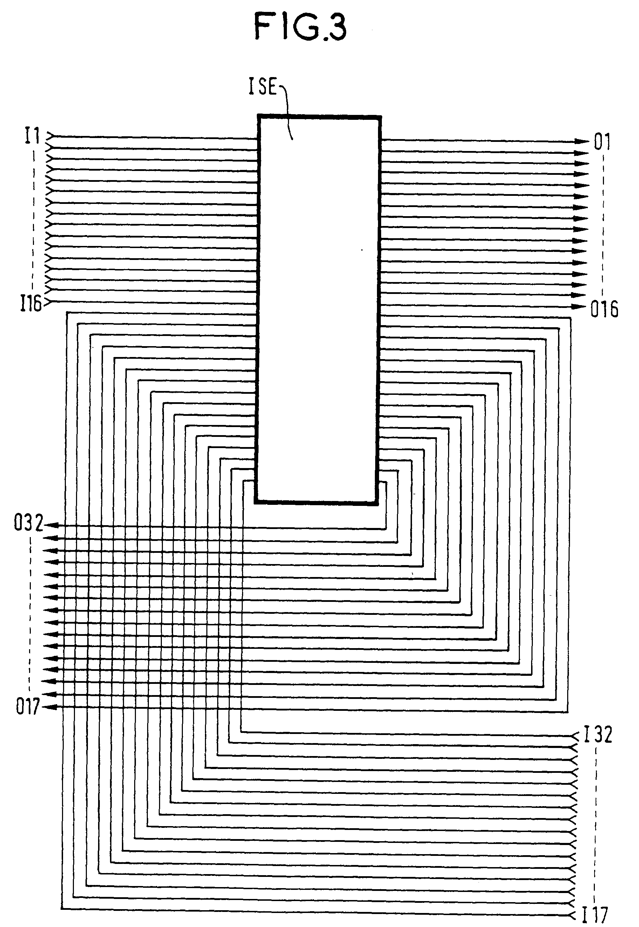

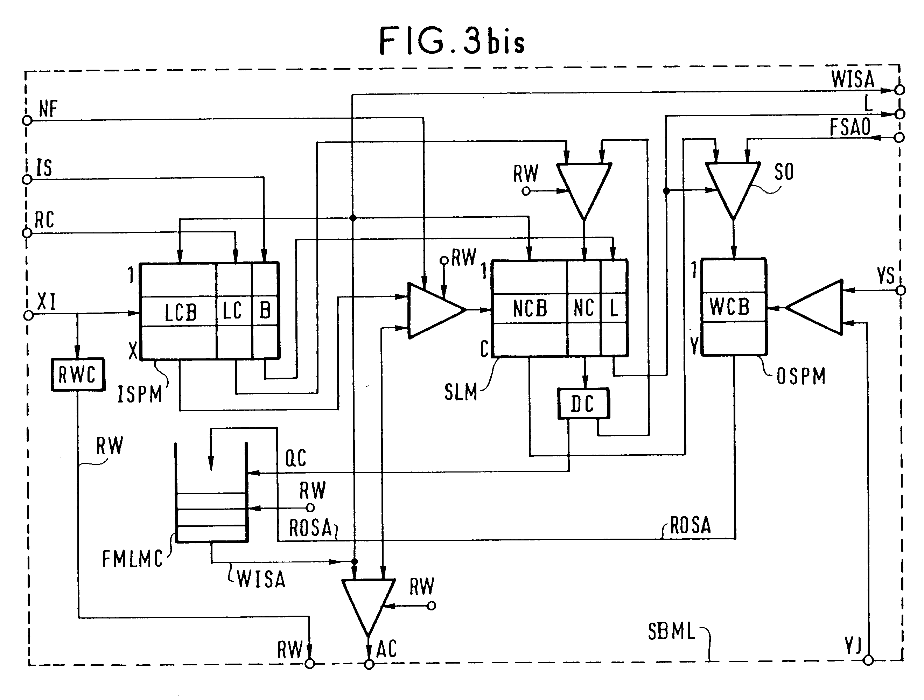

- la figure 3bis, le diagramme détaillé de la logique de gestion des mémoires de sous-cellules SBML de la figure 1,

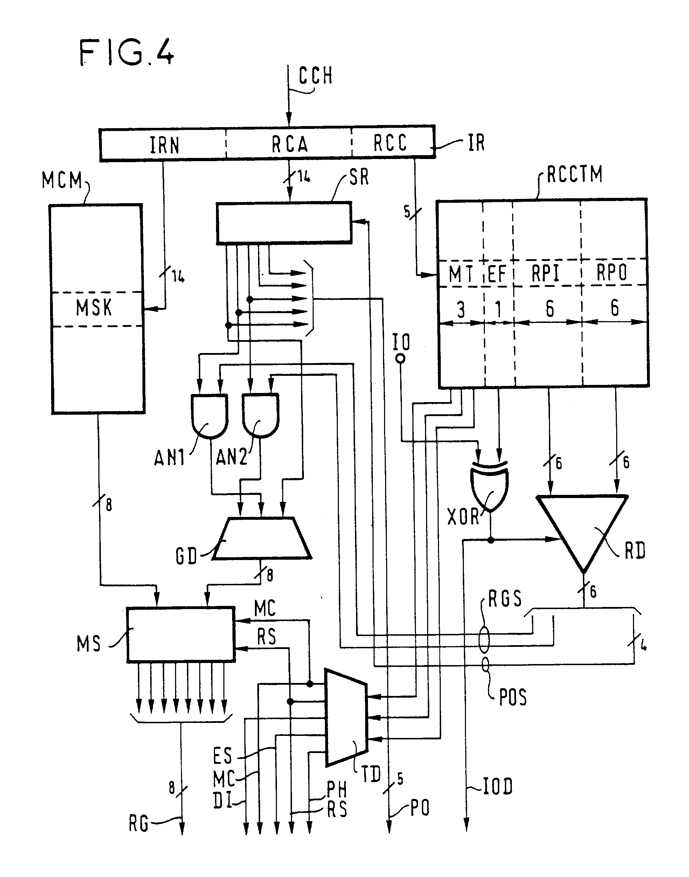

- la figure 4, le diagramme du circuit d'acheminement RL conforme à l'invention, applicable dans le commutateur élémentaire de la figure 1, permettant d'utiliser celui-ci conformément à la figure 3,

- la figure 4bis, le diagramme détaillé de la logique de gestion de cellules et sélection de sortie COQML de la figure 1,

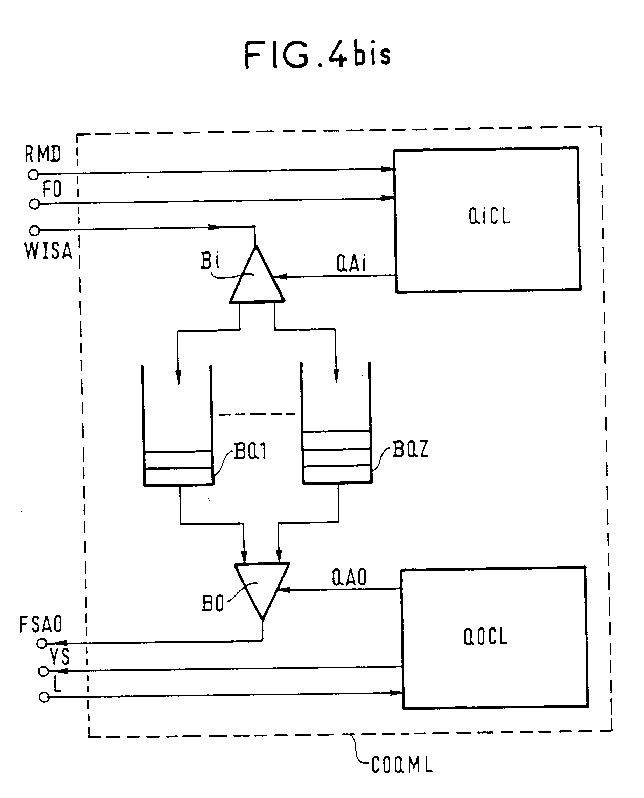

- la figure 5, un réseau de commutation unidirectionnel symétrique conforme à la présente invention,

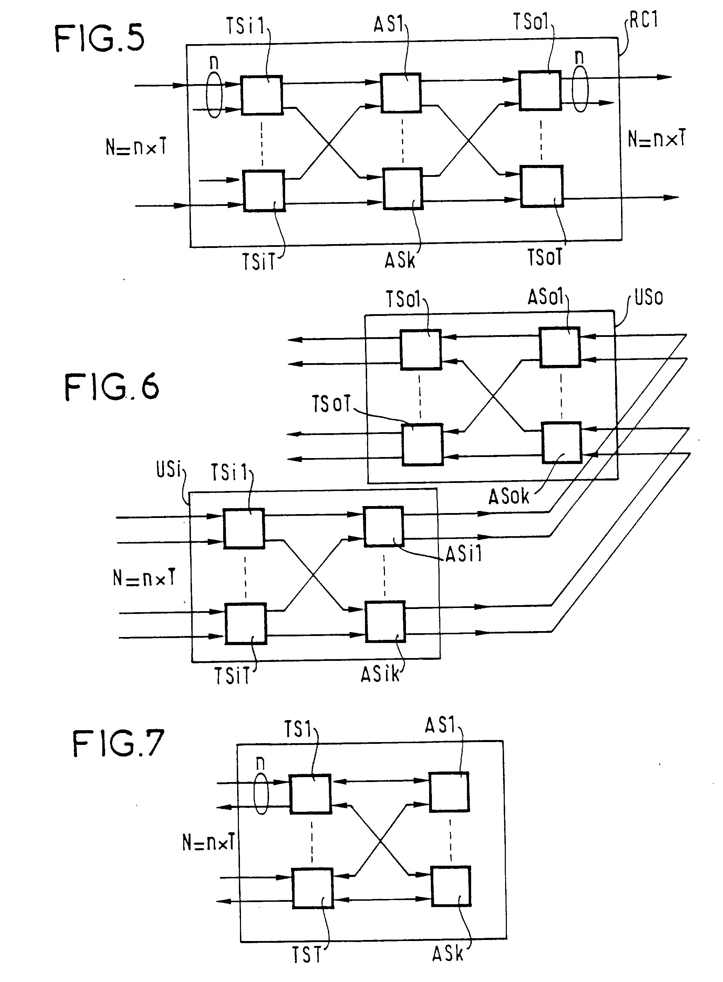

- la figure 6, un réseau de commutation unidirectionnel symétrique à quatre étages arrangés en deux unités de sélection dos à dos ayant chacune deux étages,

- la figure 7, un réseau de commutation symétrique replié correspondant à celui de la figure 6,

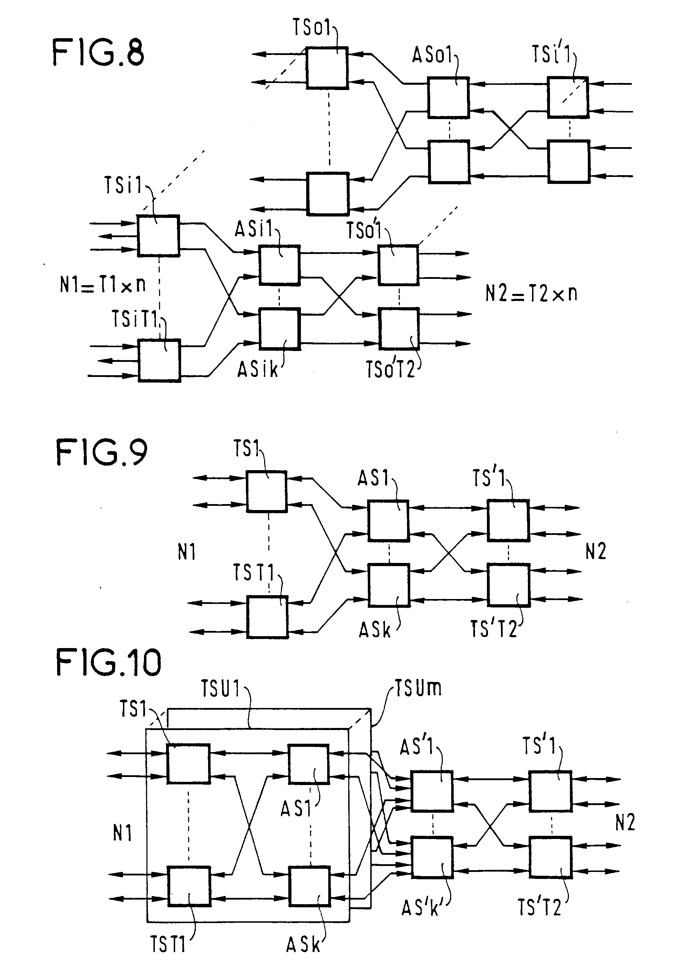

- la figure 8, un réseau de commutation unidirectionnel dissymétrique à deux fois trois étages,

- la figure 9, un réseau de commutation bidirectionel dissymetrique à trois étages correspondant au précédent,

- la figure 10, un réseau de commutation bidirectionnel dissymétrique à plusieurs unités de sélection à deux étages,

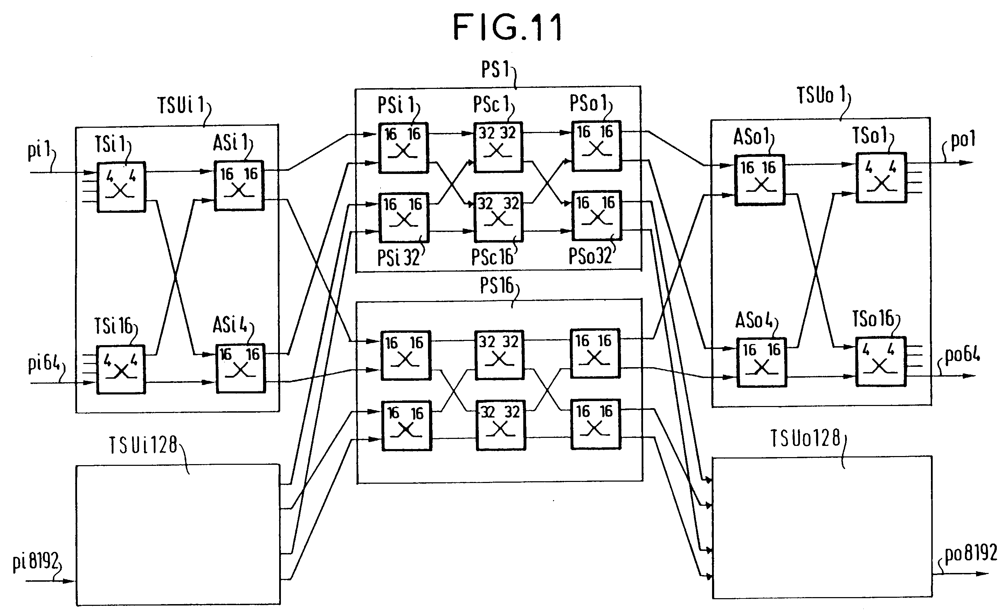

- la figure 11, un réseau de commutation unidirectionnel symétrique à plusieurs unités de sélection à deux étages interconnectées par plusieurs plans de sélection à trois étages.

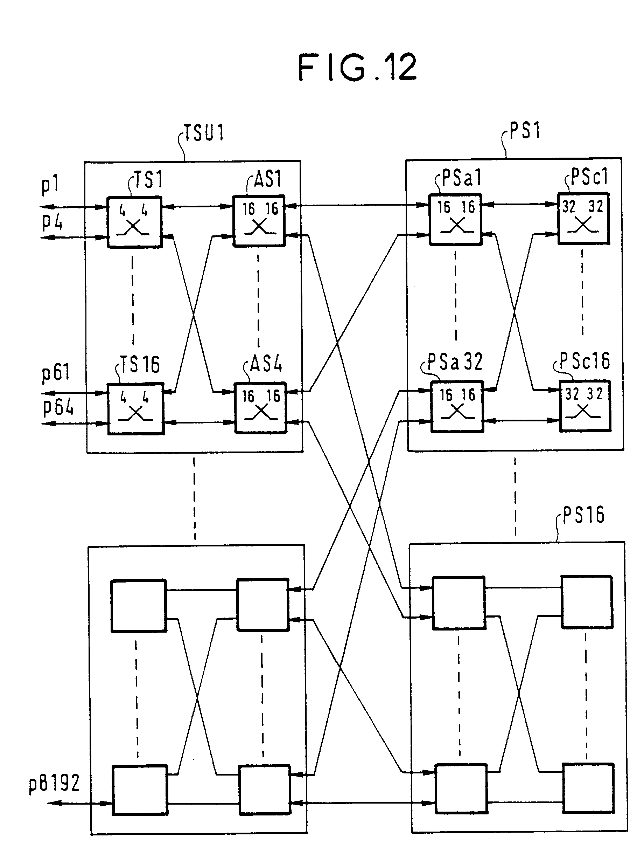

- la figure 12, un réseau de commutation symétrique replié correspondant à celui de la figure 11.

Dans ces figures, pour simplifier, diverses connexions sont représentées comme de simples fils, bien qu'elles puissent incorporer une pluralité de tels fils. En outre, les figures ne représentent pas tous les circuits de commande, leur réalisation découlant à l'évidence, pour l'homme de métier, du contenu de la description.

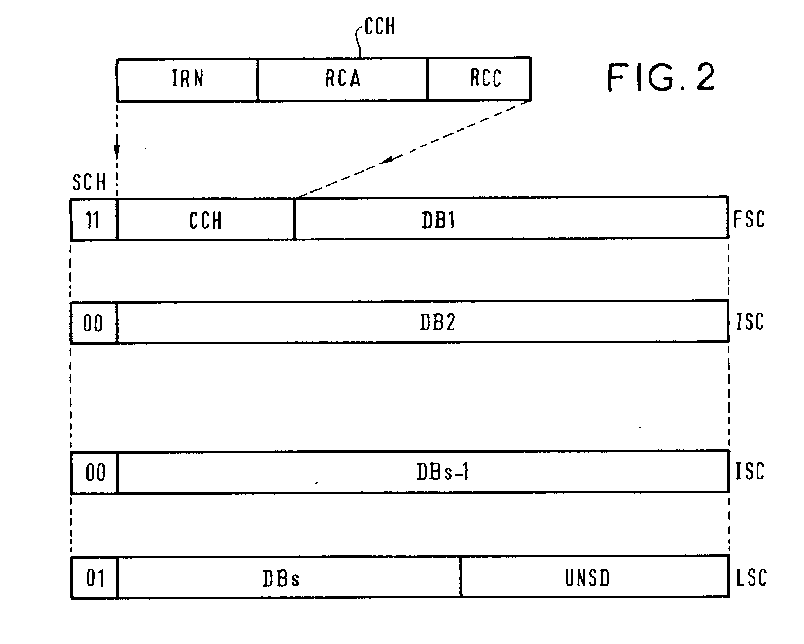

Le commutateur élémentaire représenté à la figure 1 avec X entrées I1/IX et Y sorties O1/OY (X et Y n'étant pas simultanément égaux à 1) est agencé pour commuter des signaux numériques groupés en cellules ou paquets de longueurs fixes ou variables. Une telle cellule, représentée à la figure 2, est par exemple constituée par une série de sous-cellules successives, comprenant une première sous-cellule FSC, une sous-cellule intermédiaire ISC et une sous-cellule finale LSC, toutes d'égale longueur, par exemple de 162 bits, soit 2 bits et 20 caractères à 8 bits. Chacune de ces sous-cellules contient un champ de contrôle de sous-cellule SCH ( de 2 bits) et un bloc de données DB1 - DBs, la première sous-cellule FSC contenant de plus une étiquette de cellule CCH qui, par exemple, contient une information d'acheminement permettant au commutateur élémentaire de déterminer à quel(s) groupe(s) de sorties RG1/RGY toutes les sous-cellules successives appartenant à la même cellule doit être successivement transférées, ce transfert s'effectuant sur la même ou les mêmes sorties. Dans la présente description, le champ de contrôle de sous-cellule SCH est supposé avoir une valeur binaire explicite 11, 00 ou 01 indiquant que la sous-cellule est respectivement la première sous-cellule FSC, une sous-cellule intermédiaire ISC ou la dernière sous-cellule LSC de la cellule.

L'étiquette CCH comprend elle-même trois parties, un champ de commande d'acheminement RCC, une indication de destination sous la forme d'une adresse de sortie de réseau RCA et un numéro de référence interne d'arbre de diffusion IRN.

Le champ de commande RCC, qui peut comprendre 5 bits, contient une donnée de mode d'acheminement désignant un mode d'acheminement point à point ou un mode d'acheminement de diffusion, ou encore tout autre mode prévu, dont certains seront explicités plus loin. Si, pour un commutateur, le champ de commande RCC désigne le mode d'acheminement point à point, l'analyse de l'adresse de sortie de réseau RCA fournit l'identité du groupe de sorties sélectionné. Si le champ de commande RCC désigne le mode d'acheminement de diffusion, le numéro de référence d'arbre de diffusion IRN sert à lire une mémoire qui fournit les identités des groupes de sorties correspondant aux branchements à effectuer pour cet arbre dans le commutateur élémentaire.

L'adresse de sortie de réseau RCA, qui comprendra jusqu'à 14 bits, par exemple, est l'identité du port de sortie du réseau de commutation (ou d'un groupe de ports de sortie) auquel doit être adressée la cellule reçue. Lorsque l'acheminement sélectif est effectué par plus d'un étage du réseau de commutation, une partie seulement de cette donnée de destination est nécessaire dans chacun des commutateurs élémentaires pour l'acheminement de la cellule.

Le numéro de référence interne IRN, qui comprendra aussi par exemple 14 bits, est un numéro utilisé dans le réseau de commutation pour identifier l'arbre de diffusion selon lequel une cellule entrante doit être transférée vers un certain nombre de ports de sortie donnés. Il est intéressant de noter que, selon l'invention, un arbre de diffusion dans un réseau à auto-acheminement et à trajets multiples n'est pas une connexion point à multipoint, car, étant indépendant du port d'entrée, il est caractérisé uniquement par l'ensemble des ports de sortie destinataires ; en outre, dans un tel réseau à trajets multiples, il correspond à une multiplicité de trajets point à multipoint potentiels entre l'ensemble des ports d'entrée et l'ensemble des ports de sortie destinataires de l'arbre de diffusion considéré. En fait, un arbre de diffusion IRN donné n'est pas nécessairement propre à une seule communication, mais peut être utilisé par toutes les communications de n'importe quels ports d'entrée nécessitant de transférer chaque cellule vers l'ensemble de ports de sortie destinataires de cet arbre de diffusion.

La figure 3 représente dès maintenant, pour des raisons de commodité de rédaction, un mode d'utilisation du commutateur élémentaire ISE de la figure 1 dans le cas de l'acheminement bidirectionnel, avec possibilité de réflexion, qui sera explicité plus loin en se référant aux figures 7, 9, 10 et 12.

Le commutateur élémentaire ISE, dans l'exemple considéré, comporte 32 entrées I1 à I32 et 32 sorties O1 à O32. Les entrées I1 à I32 sont réparties en deux ensembles d'entrées I1 à I16 et I17 à I32. Les sorties sont réparties en deux ensembles de sorties O1 à O16 et O17 à O32. De façon interne, hors le cas de réflexion, le commutateur élémentaire est agencé pour permettre l'acheminement normal de gauche à droite, des entrées I1 à I16 vers les sorties O1 à O16, ainsi que, parallèlement, mais de droite à gauche en raison du mode de câblage externe, des entrées I17 à I32 vers les sorties O17 à O32. En cas de réflexion, le commutateur permet l'acheminement des entrées I1 à I16 vers les sorties O17 à O32, ou bien des entrées I17 à I32 vers les sorties O1 à O16. Dans un tel commutateur, l'affectation des entrées aux directions d'acheminement est prédéterminée. Il peut être indiqué par un bit IO attaché à chaque entrée et qui indique si elle appartient à un sens "entrant" (I1 à I16, par exemple, acheminant un trafic normalement destiné à l'ensemble des sorties O1 à O16) ou au sens "sortant" opposé (I17 à I32, selon le même exemple, acheminant un trafic normalement destiné à l'ensemble des sorties O17 à O32).

L'ensemble des 16 sorties de chaque direction peut être par exemple réparti en 8 groupes au plus d'au moins deux sorties et l'acheminement de toute cellule sur les sorties de l'un des groupes demande simplement l'identification, par un mot de 8 bits (un bit par groupe) du ou des groupes sur lesquels la cellule doit être retransmise, étant entendu que la cellule est retransmise sur une seule sortie de chaque groupe ainsi identifié.

En se reportant à nouveau à la figure 1, les entrées I1/IX du commutateur élémentaire qui y sont représentées sont connectées aux entrées de données respectives d'un circuit multiplexeur MX par l'intermédiaire de la connexion en cascade de circuits convertisseurs série-parallèle respectifs SPR1/SPRX et de circuits de verrouillage respectifs IL1/ILX. La sortie de données CI du multiplexeur MX est couplée à l'entrée de données, également CI, d'une mémoire tampon de sous-cellules BM, de type RAM, tandis que l'entrée de sélection XI du multiplexeur MX est commandée par un circuit d'horloge d'entrée XC capable de connecter successivement chacune des X entrées du multiplexeur à la sortie de multiplexeur CI, durant une période de sous-cellule. Une telle période de sous-cellule est l'intervalle de temps durant lequel une sous-cellule est reçue dans un circuit convertisseur série-parallèle SPR1/SPRX.

La mémoire tampon BM est totalement partagée et sa sortie de données est connectée à l'entrée de données d'un démultiplexeur DX dont les Y sorties de données sont couplées à des sorties respectives O1/OY par l'intermédiaire de circuits convertisseurs parallèle-série respectifs PSR1/PSRY. L'entrée de sélection YJ du démultiplexeur DX est commandée par un circuit d'horloge de sortie YC capable de connecter successivement l'entrée du démultiplexeur aux Y sorties de démultiplexeur au cours d'une période de sous-cellule.

Il est à noter que, pour des sous-cellules ayant une longueur de 162 bits et pour un même débit binaire de 50 Mbit/s aux entrées et aux sorties, une période de sous-cellule est égale à :

$$162 / 50 = 3,24 \ \mu s.$$

Plus précisément, lorsque, par exemple, le commutateur élémentaire a X = 32 entrées et Y = 32 sorties, 32 opérations d'inscription et 32 opérations de lecture, soit 64 opérations, doivent être effectuées dans la mémoire tampon BM durant une même période de sous-cellule de 3,24 μs. Par suite, chacune de ces opérations doit être effectuée en :

$$3,24 / 64 = 50,62 \ ns.$$

Par ailleurs, lorsque par exemple X = 16 et Y = 32, 48 opérations doivent être effectuée durant le même période de sous-cellule. Cela signifie que chacune de ces opérations doit être effectuée en :

$$3,24 / 48 = 67,50 \ ns.$$

La mémoire tampon BM est subdivisée en C, 512 par exemple, emplacements de mémoire tampon de sous-cellule, chacun capable d'enregistrer une sous-cellule, par exemple de 162 bits ; elle possède une entrée d'adresse AC, ainsi qu'une entrée de sélection lecture/écriture RW, repectivement couplées aux sorties de mêmes noms d'une logique de gestion de mémoire tampon de sous-cellules SBML.

Le commutateur élémentaire comporte de plus une logique de sous-cellule SL et une logique d'acheminement RL, qui sont toutes les deux couplées à la sortie de données CI du multiplexeur MX.

La logique de sous-cellule SL est principalement un détecteur prévu pour détecter et vérifier le champ de contrôle de sous-cellule SCH de chaque sous-cellule et pour fournir des signaux de sortie actifs LS, FO ou NF, selon que la sous-cellule est respectivement une dernière sous-cellule LSC, une première sous-cellule FSC, ou n'est pas une première sous-cellule.

La logique d'acheminement RL effectue l'analyse de l'information d'acheminement de l'étiquette de cellule CCH de chaque première sous-cellule FSC d'une cellule et fournit des signaux de sortie actifs RMD et RC, en fonction de l'information d'acheminement. Plus particulièrement, le signal RMD fournit l'identité d'un ou plusieurs groupes de sorties sélectionnés sur lesquels les sous-cellules de la cellule doivent être transférées, tandis que le signal RC indique le nombre de ces groupes de sorties sélectionnés, c'est-à-dire 1 pour un transfert de point à point et une valeur supérieure à 1 pour un transfert de point à multipoint. Le type d'information d'acheminement et le processus d'analyse correspondant effectué par la logique d'acheminement RL pour engendrer les signaux de sorties RMD et RC dépend du mode d'acheminement employé pour la cellule. L'étiquette de cellule CCH peut, par exemple, contenir Y bits d'information d'acheminement, chacun de ces bits correspondant à un groupe de sorties sur lequel la cellule doit être transférée.

La logique de gestion de files d'attente de cellules de sorties COQML effectue, à la fois, la gestion des files d'attente de cellules et les fonctions de sélection de sortie, en enregistrant l'adresse de première sous-cellule d'entrée WISA dans une file d'attente appropriée, en fonction du mode d'acheminement et des données RMD fournies par la logique RL, et en transmettant l'adresse de première sous-cellule de sortie FSAO à la logique SBML, en même temps que l'identité de la sortie sélectionnée YS.

La logique de gestion de mémoire tampon de sous-cellules SBML est couplée aux sorties précédemment mentionnées LS, NF de la logique SL, RC de la logique RL, XI du circuit d'horloge d'entrée XC, FSAO de la logique de gestion de cellules COQML, et YJ du circuit d'horloge de sortie YC. Elle gère l'utilisation des emplacements de mémoire tampon de la mémoire BM, en fournissant l'adresse d'emplacements libres, en les rendant occupés lorsqu'ils sont utilisés et en les libérant lorsqu'ils ne le sont plus. Sous le contrôle de signaux appliqués à ses entrées, elle commande aussi, via le signal de sélection lecture/écriture RW, les opérations de lecture et d'inscription dans la mémoire tampon BM, tout en constituant des listes chaînées chaînant les adresses de mémoire tampon des sous-cellules d'une même cellule. Cela est nécessaire, du fait que les sous-cellules de la même cellule sont enregistrées dans des emplacements non corrélés de la mémoire tampon BM, alors qu'elles doivent être acheminées sur la même ou les mêmes sorties sélectionnées O1/OY, et cela dans le même ordre et sans interruption que ce qu'elles étaient à leur arrivée sur une des entrées I1/IX.

On va maintenant décrire brièvement le fonctionnement du commutateur élémentaire considéré. Lorsqu'une sous-cellule d'une cellule à longueur variable, telle que celle qui est représentée à la figure 2, apparaît sur l'une des entrées I1/IX, I1 par exemple, du commutateur élémentaire, elle est reçue par le circuit convertisseur série-parallèle correspondant SPR1. Fournie par ce circuit convertisseur SPR1, la version parallèle de la sous-cellule est transférée au circuit de verrouillage correspondant IL1, par lequel elle est fournie au multiplexeur MX. Sous le contrôle du signal d'horloge XI fourni sur l'entrée de même nom par le circuit d'horloge d'entrée XC, la sous-cellule est, à un certain moment, correspondant à cette entrée I1, fournie à l'entrée de données CI de la mémoire tampon BM, ainsi qu'à la logique de sous-cellule SL et à la logique d'acheminement RL. Il est alors déterminé si la sous-cellule est une première sous-cellule FSC, une dernière sous-cellule LSC, ou n'est pas une première sous-cellule, et pour quels groupe ou groupes de sorties RG1/RGY cette sous-cellule - et les sous-cellules suivantes appartenant à la même cellule - doivent être respectivement transférées. Les signaux de sortie résultant LS, NF et RC sont appliqués à la logique de gestion de mémoire tampon de sous-cellules SBML et le signal de sortie RMD à la logique de gestion de files d'attentes de cellules de sortie COQML.

Sous le contrôle du signal d'horloge XI, la logique SBML fournit l'adresse d'un emplacement de mémoire tampon libre, WISA par exemple, à l'entrée d'adresse AC de la mémoire tampon BM, en conséquence de quoi la sous-cellule présente à l'entrée de données CI de la mémoire tampon BM est enregistrée dans l'emplacement de celle-ci ayant l'adresse WISA. Cette adresse WISA est rendu occupée et est ajoutée dans la liste chaînée des adresses de toutes les sous-cellules déjà reçues de la même cellule (dans ce cas les signaux NF, LS, RC et RMD sont utilisés). Dans cette liste, les adresses sont disposées dans le même ordre que celui des sous-cellules de la cellule.

Au cours d'une opération de lecture, sous la commande du signal d'horloge Yj fourni sur l'entrée de même nom par le circuit d'horloge de sortie YC, l'adresse d'une sous-cellule, ROSA par exemple, est fournie à l'entrée d'adresse AC de la mémoire tampon BM et la sous-cellule contenue dans l'emplacement de mémoire correspondant est lue et transférée à la sortie de données de la mémoire tampon BM. De là, elle est fournie, par l'intermédiaire du démultiplexeur DX à la sortie ou à l'une des sorties initialement indiquées par le signal YS de la logique de gestion COQML.

On se référera maintenant à la figure 3bis, qui représente la logique de gestion de mémoire tampon de sous-cellules SBML de la figure 1, de façon plus détaillée.

Comme déjà mentionné, cette logique de gestion de mémoire tampon de sous-cellules a des entrées LS, NF, RC, XI, YJ, FSAO, YS, et des sorties AC, L, RW et FSAI. Elle comprend un circuit de gestion des emplacements de mémoire libres FMLMC, une mémoire de chaînage de sous-cellules SLM, une mémoire de pointeurs de sous-cellules entrantes ISPM et une mémoire de pointeurs de sous-cellules sortantes OSPM.

Le circuit FMLMC de la logique SBML est constitué par une mémoire de file d'attente d'emplacements libres FQ qui est par exemple une mémoire de file d'attente de type FIFO ( premier entré - premier sortie) enregistrant les adresses de tous les emplacements libres de la mémoire tampon BM. Le circuit FMLMC a une entrée ROSA, une sortie WISA et des bornes de commande QC et RW.

La mémoire de chaînage de sous-cellule SLM comprend C emplacements de mémoire correspondant aux C emplacements de mémoire tampon de la mémoire tampon de sous-cellules BM et enregistre, pour chacun d'eux :

- l'adresse de chaînage à la sous-cellule suivante (NCB),
- le nombre de copies de sous-cellule qui doivent être lues (NC),
- un indicateur de dernière sous-cellule de la cellule (L).

Le champ de mémoire SLM est associé à un compteur rétrograde DC, de sorte que la valeur NC soit décrémentée d'une unité à chaque opération de lecture de la mémoire SLM ; ensuite, la nouvelle valeur est enregistrée à la place de la précédente. Bien entendu, lorsque la nouvelle valeur atteint zéro, toutes les copies de sous-cellule ont été lues et le compteur DC engendre un signal QC permettant l'enregistrement de l'adresse de la sous-cellule lue (ROSA), qui devient libre, dans le circuit de gestion d'emplacement de mémoire tampon libre FMLMC.

La mémoire de pointeurs de sous-cellules entrantes ISPM a X emplacements correspondant aux X entrées et elle fonctionne en synchronisme avec les signaux d'horloge d'entrée XI définissant l'exploitation à multiplexage temporel des X entrées. Pour chaque entrée, elle enregistre :

- l'adresse en mémoire tampon de la dernière sous-cellule reçue (LCB),
- le nombre de copies de sous-cellule qu'il faudra lire plus tard (LC),
- un indicateur de dernière sous-cellule de la cellule (B).

La mémoire de pointeurs de sous-cellules sortantes OSPM a Y emplacements correspondant aux Y sorties et elle fonctionne en synchronisme avec les signaux d'horloge de sortie YJ définissant l'exploitation à multiplexage temporel des Y sorties. Pour chaque entrée, elle enregistre l'adresse de l'emplacement de la sous-cellule suivante attendant d'être transmise sur la sortie considérée (WCB).

Le circuit de commande d'écriture fournit aux divers circuits les signaux de commande appropriés correspondant au fonctionnement alterné des circuits SBML associé aux opérations de lecture et d'écriture alternées dans la mémoire tampon BM, en conséquence des signaux d'horloge entrelacés relatifs aux entrées (XI) et aux sorties (YJ). En accord avec cela, le signal RW résultat est actif durant chaque opération d'écriture dans la mémoire tampon BM, pour l'entrée d'une sous-cellule, et inactif durant une opération de lecture de la mémoire tampon BM pour la transmission en sortie d'une sous-cellule.

La description de principe suivante caractérise le fonctionnement accompli par ces fonctions de la logique de gestion SBML durant une phase d'écriture ou de lecture et pour chacun des trois types de sous-cellules d'une cellule : première sous-cellule FSC, sous-cellule intermédiaire ISC et dernière sous-cellule LSC.

On considèrera d'abord la phase d'écriture dans la mémoire tampon BM, dans le cas d'une première sous-cellule FSC. Dans un tel cas, le signal FO est fourni et la logique de gestion SBML reçoit des logiques SL et RL :

- NF = O, pour indiquer une première sous-cellule,
- LS = O, pour indiquer qu'il ne s'agit pas d'une dernière sous-cellule,
- RC = 2, en supposant par exemple le cas d'un transfert de point à multipoint sur deux groupes de sorties.

Le signal RW étant actif, une adresse d'écriture de sous-cellule WISA est fournie par le circuit de gestion FMLMC, qui est l'emplacement libre de mémoire tampon sélectionné dans lequel est enregistrée la sous-cellule reçue. L'adresse WISA est également enregistrée dans la mémoire de pointeurs ISPM, pour l'entrée XI, afin de l'enregistrer comme adresse de dernière sous-cellule reçue, en vue du cycle suivant relatif à la même entrée. Par ailleurs, l'adresse WISA est également fournie à la logique COQML qui l'enregistrera comme identité de référence de cette nouvelle cellule reçue, du fait que cette logique reçoit le signal FO de valeur 1.

En ce qui concerne la mémoire de chaînage SLM, du fait qu'il s'agit d'une première sous-cellule FSC ( NF = 0), l'adresse WISA n'est pas enregistrée dans le champ NCB, puisque cette nouvelle sous-cellule n'a pas besoin d'être chainée avec la dernière de la précédente cellule. En outre, les autres champs de données sont exploités pour cette sous-cellule précédente en sélectionnant son adresse qui est fournie par le champ LCB de la mémoire de pointeurs ISPM et en enregistrant LC et B provenant de la mémoire de pointeurs ISPM dans les champs NC et L de la mémoire SLM respectivement. Les signaux de commande PC et LS sont enregistrés respectivement dans les champs LC et B de la mémoire ISPM pour l'entrée XI.

Dans le cas d'une sous-cellule intermédiaire, le signal FO est inactif et la logique de gestion de mémoire tampon de sous-cellules SBML reçoit des logiques SL et RL des signaux :

- NF = 1,
- LS = O,
- le signal RC n'est pas utilisé avec NF = 1.

Comme précédemment, le signal RW est actif et une autre adresse WISA est fournie par le circuit de gestion FMLMC, adresse d'emplacement de mémoire tampon qui est utilisée pour :

- adresser la mémoire tampon BM et y inscrire la sous-cellule intermédiaire ISC,
- être enregistrée dans le champ LCB de la mémoire de pointeurs ISPM comme nouvelle adresse de dernière sous-cellule reçue de la cellule,
- être enregistrée dans le champ NCB de la mémoire SLM adressée par le contenu du champ LCB de la mémoire ISPM, afin d'y inscrire que cette nouvelle adresse WISA est l'adresse de la sous-cellule suivante chaînée avec la précédente qui est en fait l'emplacement de mémoire sélectionné dans la mémoire SLM.

Simultanément, les données des champs LC et B de la mémoire ISPM sont transférées dans les champs NC et L de la mémoire SLM, avant que B soit remplacé dans la mémoire ISPM par une nouvelle valeur venant du signal LS.

Dans le cas d'une dernière sous-cellule LSC, le signal FO est inactif et la logique de gestion SBML reçoit des logiques SL et RL :

- NF = 1,
- LS = 1,
- alors que RC n'est pas utilisé puisque NF = 1.

A nouveau le signal RW est actif et une autre adresse WISA est fournie par le circuit FMLMC, et l'adresse d'emplacement de mémoire tampon correspondante est utilisée dans la mémoire tampon BM, et les mémoires ISPM et SLM exactement comme dans le cas précédent de l'enregistrement d'une sous-cellule intermédiaire ISC.

Simultanément, les valeurs LC et B de la mémoire ISPM sont transférées dans les champs NC et L de la mémoire SLM avant que B soit remplacé, dans la mémoire ISPM par la nouvelle valeur venant du signal LS, indiquant par conséquent que, maintenant, la dernière sous-cellule d'une cellule vient d'être reçue.

Toutefois, tout comme il a été souligné dans la description relative à l'enregistrement d'une première sous-cellule FSC, durant le cycle suivant relatif à l'entrée XI, les valeurs LC et B = 1 seront transférées dans les champs NC et L de la mémoire SLM à l'adresse de la cellule précédente (la dernière) fournie par le champ LCB de la mémoire ISPM.

On considérera maintenant la phase de lecture de la mémoire tampon BM durant laquelle le signal RW est inactif. Dans un premier temps, on considérera particulièrement le cas de la lecture d'un première sous-cellule FSC.

Il doit être supposé que, au moment d'émettre la première sous-cellule, le contenu WCB de la mémoire de pointeurs de sous-cellules sortantes OSPM de la sortie considérée YS a été initialisé avec l'adresse de la première sous-cellule de la cellule à transmettre. Cela apparaîtra plus loin, lors de la lecture de la dernière sous-cellule de la cellule.

La mémoire de pointeurs OSPM fournit par suite l'adresse de la sous-cellule sortante à lire qui est utilisée pour :

- adresser la mémoire tampon BM pour la lecture de la première sous-cellule correspondante FSC,
- sélectionner la mémoire SLM en lecture, ce qui fournit :

  - une indication NCB qui est transférée à la mémoire OSPM pour enregistrement comme nouvelle adresse WBC, en vue du cycle suivant relatif à la sortie YJ,
  - une indication NC qui est décrémentée d'une unité et réenregistrée comme nouvelle indication NC, si elle n'est pas nulle ; si la valeur zéro est obtenue, ce qui signifie que le nombre voulu d'opérations de lecture de cette sous-cellule (fournissant le nombre voulu de copies de celle-ci) a été effectué, le circuit DC engendre un signal QC permettant au circuit FMLMC d'enregistrer que l'emplacement de mémoire tampon d'adresse ROSA peut être libéré et inclus dans l'ensemble des emplacements de mémoire tampon libres ;

- une valeur L qui est égale à zéro puisqu'il ne s'agit pas de la dernière cellule et commande le transfert précédemment mentionné de la valeur NCB de la mémoire SLM au champ WCB de la mémoire OSPM, via le multiplexeur SO.

Dans le cas d'une cellule intermédiaire ISC, les mêmes opérations ont lieu dans les mémoires OSPM et SLM et dans le circuit FMLMC que pour la lecture d'une première sous-cellule FSC.

Dans le cas d'une dernière sous-cellule LSC, la mémoire OSPM fournit à nouveau l'adresse ROSA de la sous-cellule à émettre, une dernière sous-cellule LSC dans le cas présent, qui est utilisée pour :

- adresser la mémoire tampon BM pour la lecture de la dernière sous-cellule,
- sélectionner la mémoire SLM en lecture, ce qui fournit :

  - une valeur NC qui est décrémentée et traitée exactement comme dans les autres cas de lecture de sous-cellule,
  - une valeur L, maintenant égale à 1, indiquant que l'on est en présence d'une dernière sous-cellule LSC, ce qui, dans ce cas particulier, interdit le transfert de la valeur NCB de la mémoire SLM à l'emplacement WCB de la mémoire OSPM, puisqu'il n'y a aucun chaînage vers une sous-cellule suivante fournie par la valeur NCB de la mémoire SLM dans le cas d'une dernière sous-cellule LSC ; à la place, L = 1 est fourni à la logique COQML pour indiquer que la sortie considérée YZ devient disponible pour l'envoi d'une cellule suivante, dès le prochain cycle, une dernière sous-cellule d'une cellule étant en cours d'envoi.

Ensuite, après sélection par la logique COQML de la cellule appropriée qui doit être transmise sur la sortie considérée YJ, la logique COQML initialise la valeur WBC dans la mémoire OSPM pour ce qui concerne la sortie YJ, en y inscrivant l'adresse d'emplacement de mémoire tampon de la première sous-cellule FSAO de la nouvelle cellule sélectionnée, avant le prochain cycle concernant la sortie YJ. Du fait que ce processus d'initialisation n'est pas réalisé au cours de la période d'horloge YJ de la dernière sous-cellule LSC, un accès asynchrone à la mémoire OSPM est utilisé, au moyen de l'adresse de sortie YS fournie par le logique COQML.

Alors que cette exemple de réalisation de la logique de gestion de mémoire tampon de sous-cellules SBML a été décrit pour illustrer les principes de la gestion de la mémoire tampon de sous-cellules employée pour le transfert de cellules composées de sous-cellules entre toute entrée et toute sortie (ou sorties) du commutateur élémentaire, d'autres modes de réalisation des fonctions de cette logique de gestion SBML, par exemple en ce qui concerne le circuit de gestion d'emplacements de mémoire tampon libres FMLMC, sont également inclus dans des types de commutateurs élémentaires conformes à la présente invention.

La figure 4 représente un mode de réalisation du circuit d'acheminement RL agencé pour emploi dans le commutateur élémentaire ISE de la figure 1, et permettant également le fonctionnement bidirectionnel conformément à ce qui est illustré à la figure 3.

Les circuits de la figure 4 reçoivent, dans un registre IR, l'étiquette de cellule CCH mentionnée à la figure 1, pour fournir en sortie l'information marquant la liaison de commande RMD qui fournit à la logique de gestion de cellules et sélection de sortie les informations spécifiant le mode d'acheminement sélectionné (RS, MC, DI, ES, PH), ainsi que les données d'acheminement (RG, PO)

Les informations de mode d'acheminement sont les suivantes :

- un signal de mode "groupe" RS, qui est présent lorsque la cellule doit être retransmise sur l'une des sorties d'un groupe de sorties, en cas d'acheminement de point à point,
- un signal de mode "diffusion" MC, qui est présent lorsque la cellule doit être acheminée sur l'une des sorties de chacun de plusieurs groupes de sorties, en cas d'acheminement de point à multipoint,
- un signal de mode "distribution" DI, qui est présent lorsque la cellule doit être retransmise sur l'une des sorties d'un ensemble de sorties, au sens explicité en se référant à la figure 3, dans le cas d'un commutateur élémentaire bidirectionnel, ou sur l'une de toutes les sorties du commutateur élémentaire, dans le cas d'un commutateur élémentaire unidirectionnel, en réalisant de ce fait une distribution générale, visant à un brassage des cellules reçues par le réseau de commutation,
- un signal de mode "service" ES, qui indique que la cellule reçue est destinée à une sortie particulière de commande,
- un signal de mode "transfert dirigé" PH, qui indique que la cellule doit être retransmise sur une sortie prédéterminée, pour des raisons de test, par exemple.

Les données d'acheminement de la liaison RMD comprennent :

- des signaux d'identité de groupe RG qui identifient le ou les groupes sur une sortie du ou desquels doit être retransmise la cellule reçue, pour les modes d'acheminement RS et MC,
- des signaux d'identité de sortie individuelle PO utilisés avec le mode d'acheminement PH.

Les circuits de la figure 4 reçoivent en outre, selon l'entrée sur laquelle est parvenue une cellule reçue, un indicateur de direction entrante IO qui est par exemple fourni par le circuit de réception fournissant la cellule dont il s'agit, sur le multiplexeur d'entrée de la figure 1, spécifiant la direction entrante concernée, au sens mentionné en se référant à la figure 3.

Les circuits de la figure 4 comprennent les éléments suivants :

- le registre IR déjà mentionné, pour recevoir l'étiquette CCH de chaque cellule reçue, qui comprend, comme indiqué, les informations RCC, RCA et IRN,
- une mémoire de traduction de commande RCCTM, enregistrant 32 mots de 16 bits, appelés paramètres d'acheminement, comprenant chacun un code de mode d'acheminement MT à trois bits, un indicateur ou bit de réflexion EF, un champ de groupe d'acheminement "entrant" RPI, à 6 bits et un champ de groupe d'acheminement "sortant" RPO, également à 6 bits,
- une mémoire de diffusion MCM, enregistrant une pluralité de mots de masque MSK à 8 bits, un bit par groupe de sorties, identifiant chacun les différents groupes d'acheminement vers lesquels une copie doit être émise,
- un décodeur de mode d'acheminement TD, décodant le code de mode d'acheminement MT et fournissant en conséquence l'un des cinq signaux de mode mentionnés précédemment,
- un sélecteur de direction RD sélectionnant soit le champ de groupe d'acheminement "entrant" RPI, soit le champ de groupe d'acheminement "sortant "RPO" de la mémoire de traduction de commande RCCTM, en fonction du bit de réflexion EF et de l'indicateur de direction entrante IO,
- un sélecteur de groupe de sortie MS ayant deux entrées à 8 bits en parallèle et qui fournit les signaux d'identité de groupe RG, également à 8 bits, dont chacun des bits correspond à un groupe distinct parmi les 8 groupes d'acheminement possibles,
- un registre à décalage à 14 bits SR ayant une sortie PO à cinq conducteurs ; dans le cas où le mode d'acheminement est le mode "physique" PH, cette sortie identifie la sortie sur laquelle doit être acheminée la cellule reçue,
- un décodeur de groupe d'acheminement GD,
- une porte OU-exclusif XOR,
- et deux portes ET, AN1 et AN2.

Les circuits logiques d'acheminement de la figure 4 fonctionnent comme exposé ci-après, lorsque l'en-tête d'une cellule reçue est présente sur le multiplexeur d'entrée (figure 1), dont l'étiquette CCH est fournie au registre IR, tandis que le bit IO indique la direction entrante d'acheminement. Comme indiqué plus haut, une horloge rythme le fonctionnement des circuits, de façon appropriée, conformément à la pratique courant en la matière.

L'information de commande RCC, caractéristique d'une séquence de transfert à travers le réseau de commutation, n'indique pas directement le mode d'acheminement à appliquer dans le commutateur élémentaire considéré. Ce mode d'acheminement est fonction du type de réseau de commutation et de la position du commutateur élémentaire dans celui-ci.

L'information de commande, pour être interprétée, est utilisée comme adresse pour la lecture, dans la mémoire de traduction de commande RCCTM, des paramètres d'acheminement comprenant les éléments MT, EF, RPI et RPO définis plus haut.

Le code de mode d'acheminement à appliquer MT est décodé par le décodeur de mode d'acheminement TD qui, en conséquence, fournit l'un des signaux de mode RS, MC, ES, DI ou PH.

L'indicateur de direction entrante IO est appliqué à une des entrées de la porte OU exclusif XOR, tandis que le bit de réflexion EF est appliqué à son autre entrée. La sortie de la porte XOR fournit le signal de commande du sélecteur de direction sortante RD. Ce dernier sélectionne soit le champ de groupe d'acheminement "entrant" RPI, soit le champ de groupe d'acheminement "sortant" RPO, spécifiant, pour l'un et l'autre ensembles de sorties, une partie spécifique de l'adresse de destination RCA destinée à fournir l'identité d'un groupe d'acheminement sur une sortie duquel doit être retransmise la cellule reçue. Chacun de ces champs comprend un indicateur de position POS à 4 bits et un indicateur de dimension RGS à deux bits. L'indicateur de position POS commande le registre à décalage SR de manière que l'information RCA y soit décalée et qu'une partie de trois bits qu'elle contient vienne dans les trois étages de gauche, sur la figure, de ce registre SR, ou encore qu'une partie de cinq bits qu'elle contient vienne dans les cinq étages de gauche, sur la figure, du registre SR. L'indicateur de dimension RGS indique combien des trois bits mentionnés en premier doivent être utilisés pour définir l'identité d'un groupe d'acheminement. Ainsi, le bit de gauche de ces trois bits est-il transmis directement du registre à décalage SR au décodeur de numéro de groupe GD, le bit suivant est transmis par la porte ET AN1 conditionnée par un des signaux RGS et le troisième bit par la porte ET AN2 conditionnée par l'autre des signaux RGS. Le décodeur de numéro de groupe GD fournit un mot de 8 bits qui constitue l'identité d'un groupe d'acheminement, appliquée au sélecteur MS. Dans ce mot, un seul bit est à 1, par exemple, tous les autres étant à O.

Simultanément, le numéro de référence interne d'arbre de diffusion à 14 bits IRN est appliqué par le registre IR à la mémoire de diffusion MCM, où il sert d'adresse pour la lecture d'un mot de masque à 8 bits MSK. Comme indiqué précédemment, ce mot de masque identifie un ou plusieurs groupes d'acheminement dans un mot de 8 bits, dont un ou plusieurs sont à 1, et les autres à 0. Il est appliqué lui aussi au sélecteur MS.

Si le signal de mode fourni par le décodeur TD est le signal de mode "groupe" RS, le sélecteur MS fournit sur sa sortie un signal d'identité de groupe RG qui est le signal fourni par le décodeur GD ; s'il s'agit du signal de mode "diffusion" MC, le signal RG transmis par le sélecteur MS est le signal MSK.

Par ailleurs, les cinq étages de gauche du registre à décalage SR, après le décalage causé par l'indicateur de position POS, fournissent directement l'identité PO d'une sortie sur laquelle doit être retransmise la cellule reçue, dans le cas du mode d'acheminement "physique" PH.

Dans le cas particulier du mode "distribution" DI, aucun groupe de sorties n'a besoin d'être identifié, puisqu'il s'agit d'un seul groupe comprenant toutes les sorties de l'ensemble considéré dans la direction de transfert concernée.

Dans le cas du mode "service" ES, la sortie concernée est directement connue, , puisque la cellule reçue est destinée une sortie particulière de commande représentée à la figure 1.

On voit ainsi que l'information contenue dans la mémoire de traduction de commande RCCTM définit, dans chaque commutateur élémentaire, l'interprétation que ce commutateur doit faire des 32 séquences de transfert possibles désignées par l'information de commande RCC pour déterminer le mode d'acheminement à appliquer aux données d'acheminement contenues dans l'étiquette de la cellule reçue. Cela revient à combiner les informations d'acheminement d'une cellule, inchangées alors que la cellule traverse des commutateurs de différents étages du réseau de commutation, avec les paramètres d'acheminement du commutateur, dérivés de sa position dans le réseau, par exemple propre à chaque étage et conduisant à un mode d'acheminement particulier dans chaque étage et pour chaque séquence d'acheminement.

Les informations contenues dans la mémoire de traduction de commande RCCMT sont semi-permanentes et peuvent être inscrites à la mise en service de chaque commutateur élémentaire. Par contre, les informations contenues dans la mémoire de diffusion MCM doivent être modifiées en cours d'exploitation, pour l'établissement de chaque arbre de diffusion.

La figure 4bis représente le diagramme général de la logique de gestion de cellules et sélection de sortie COQML de la figure 1.

Lorsque la décision d'acheminement d'une nouvelle cellule reçue sur une entrée du commutateur élémentaire est prise par le circuit d'acheminement RL, celui-ci fournit à la logique COQML les informations de mode d'acheminement, ainsi que les données d'acheminement associées, sur la liaison de commande RMD, cette commande étant validée par le signal de commande FO reçu du circuit SL, qui indique la présence d'une première sous-cellule FSC contenant les informations destinées à l'acheminement de la cellule en cours de réception. En outre, simultanément, la logique de gestion de mémoires de sous-cellules SBML fournit à la logique COQML l'adresse WISA de la mémoire tampon BM, dans laquelle a été enregistrée cette première sous-cellule FSC.

Lorsqu'une sortie YJ du commutateur élémentaire transmet la dernière sous-cellule LSC d'une cellule et va donc devenir disponible pour en transmettre une suivante, la logique de gestion de mémoires de sous-cellules SBML indique une demande de cellule suivante au moyen du signal L alors actif, comme il a été expliqué auparavant, dans la description de la logique SBML. Alors, la logique COQML sélectionne la cellule suivante à transmettre sur cette sortie, en fournissant à la logique SBML l'adresse FSAO de la première sous-cellule FSC de la cellule à transmettre sur la sortie YJ, cette dernière indication étant notifiée par l'adresse de sortie YS également fournie par la logique COQML à la logique SBML, afin de pouvoir effectuer cette opération en dehors du temps synchrone d'horloge YJ relatif à la sortie YJ.

La logique de gestion de cellules et de sélection de sortie COQML comprend les circuits suivants :

- des files d'attente BQ1/BQZ dont les entrées respectives proviennent d'un démultiplexeur BI et les sorties respectives sont reliées à un multiplexeur BO, et qui réalisent le stockage temporaire des identités de cellules en attente de sortie, en respectant la discipline premier entré/premier sorti, lesdites identités étant caractérisées par exemple par les adresses de la première sous-cellule de chaque cellule dans la mémoire tampon,
- une logique de commande d'entrée QICL qui reçoit les demandes de mise en file d'attente des cellules,
- une logique de commande de sortie QOCL qui sélectionne chaque prochaine cellule à transmettre sur une des sorties du commutateur élémentaire, dès que celle-ci devient disponible.

Outre la gestion de l'attente temporaire des cellules à transmettre, par stockage de leurs identités en files d'attente, la logique COQML assure également la sélection d'une sortie individuelle dans chaque groupe d'acheminement sélectionné, étant donné que pour les modes d'acheminement point-à-point RS, point-à-multipoint MC, et distribution DI, le circuit d'acheminement RL identifie seulement les groupes d'acheminement vers lesquels une copie de la cellule doit être transmise, ou bien l'ensemble des sorties dans une direction dans le mode DI.

Dans une première réalisation, cette fonction de sélection individuelle de sortie est effectuée par la logique de commande d'entrée QICL, avant la mise en file d'attente de l'identité de la cellule. Dans ce cas, chaque file d'attente BQ1/BQZ est associée directement à chacune des Y sorties du commutateur élémentaire.

Une autre forme de réalisation équivalente consiste à effectuer la même fonction de sélection de sortie par la logique de commande de sortie QOCL, donc après la mise en file d'attente de l'identité de la cellule. Dans ce deuxième cas, chaque file d'attente BQ1/BQZ est associée à un groupe d'acheminement comprenant une ou plusieurs sorties et non pas à une sortie individuelle du commutateur élémentaire.

Dans l'une ou l'autre variante de réalisation, le dispositif de sélection de sortie nécessaire pour les modes d'acheminement RS, MC et DI peut être réalisé de façon connue sur la base d'une distribution cyclique des cellules aux sorties d'un groupe d'acheminement considéré, ce qui permet de réaliser une répartition homogène de la charge de trafic de cellules du groupe d'acheminement sur chacune de ses sorties. Une autre solution proposée est d'utiliser un générateur de signal pseudo ou quasi-aléatoire pour sélectionner une sortie pour chaque cellule, ce qui permet d'éliminer, tout au moins en grande partie, toute corrélation entre les flux de cellules sur les entrées et les sorties de chaque commutateur élémentaire.

Dans le cas des modes ES ou PH, une sortie du commutateur élémentaire est respectivement implicite ou déjà sélectionnée et le rôle de la logique COQML se limite à la fonction de gestion de ces cellules en files d'attente par sortie individuelle correspondante.

On va maintenant, en se référant aux figures 5 à 12 donner plusieurs exemples de réalisation du réseau de commutation de l'invention, en s'appuyant sur les figures 1 à 4, en ce qui concerne les caractéristiques propres des commutateurs élémentaires employés dans les différents étages de ces réseaux de commutation.

En effet, les propriétés d'un réseau de commutation proviennent des propriétés des commutateurs élémentaires qui le constituent, telles qu'elles sont aménagées, selon l'invention, par les paramètres d'acheminement semi-permanents dérivés de la position des commutateurs et de la configuration du réseau de commutation, comprenant essentiellement le nombre d'étages, la caractéristique unidirectionnelle ou bidirectionnelle de chaque étage, le maillage entre les commutateurs élémentaires et le mode de raccordement des ports d'entrée et de sortie.

L'invention, on le verra, s'applique dans toutes les configurations de réseaux de commutation qui vont être décrites, ainsi que dans les nombreuses variantes que l'on peut aisément en déduire.

Il convient d'indiquer aussi que, dans toute configuration de réseau de commutation, il est généralement souhaitable, pour des raisons de standardisation et de facilité d'extension, qu'un même type de commutateur élémentaire soit utilisé dans tous les étages du réseau. On vérifiera aisément que le commutateur élémentaire des figures 1, 3 et 4 répond à ce besoin grâce à leur faculté d'être initialisés avec des paramètres d'acheminement spécifiques, par exemple par étage, pour chaque séquence de transfert de cellule à travers le réseau de commutation.

La figure 5 représente un réseau de commutation RC1, unidirectionnel et symétrique, constitué de commutateurs élémentaires tels que celui de la figure 1, agencés en trois étages comprenant, le premier, des commutateurs TSi1 à TSiT, ayant n entrées chacun, l'étage central, des commutateurs AS1 à ASk, et le dernier, des commutateurs TSo1 à TSoT ayant n sorties chacun. De la sorte, le réseau de commutation a N = nT ports d'entrée connectés aux entrées des commutateurs élémentaires du premier étage et N = nT ports de sortie connectés aux sorties des commutateurs élémentaires du dernier étage. Le trafic de cellules est acheminé des ports d'entrée aux ports de sortie en traversant tous les commutateurs dans une seule direction ; c'est pourquoi ce réseau est dit unidirectionnel. Il est dit symétrique, car le nombre des sorties est le même que celui des entrées. Les T commutateurs du premier étage ont une ou plusieurs (m) mailles vers chacun des k commutateurs de l'étage central, soit m x k sorties. Les T commutateurs du dernier étage ont une ou plusieurs (m) mailles venant de chacun des commutateurs de l'étage central, soit m x k entrées. Les commutateurs de l'étage central ont ainsi T x m entrées et T x m sorties.

En reprenant les chiffres précédemment avancés (figure 3, par exemple), les commutateurs élémentaires des trois étages peuvent être des commutateurs à 32 entrées et 32 sorties, avec T x m = k x m = 32.

Chacun des commutateurs de l'étage central pouvant atteindre tous les commutateurs du dernier étage, une cellule parvenant au réseau de commutation sur un port d'entrée quelconque, du commutateur élémentaire TSi1, par exemple, peut être adressée à l'un quelconque des commutateurs de l'étage central, AS1 à ASk, que l'acheminement de cette cellule soit de type point à point ou point à multipoint. Dans un tel réseau on prévoira donc, selon l'invention, que les sorties des commutateurs du premier étage sont arrangées en un seul groupe de sorties et qu'une cellule reçue par un commutateur du premier étage, que l'acheminement soit de point à point ou de point à multipoint, sera retransmise sur une sortie sélectionnée dans ce groupe unique de sorties. Il suffit pour cela (voir description relative à la figure 4) que la mémoire de traduction de commande (RCCTM), dans ces commutateurs élémentaires TSi1 à TSiT, fournisse le signal de mode "distribution" DI en échange des informations de commande RCC signifiant que la cellule doit être distribuée sur une sortie quelconque vers l'étage suivant, pour l'acheminement de point à point ou de point à multipoint.

En d'autres termes, une donnée de position incluse dans les commutateurs du premier étage (implicitement représentée par les paramètres d'acheminement contenus dans la mémoire de traduction de commande) permettra une interprétation dans ce sens de l'information d'acheminement de la cellule.

Par contre, en ce qui concerne les commutateurs de l'étage central, chacun d'eux n'a qu'une ou plusieurs (m) mailles vers chaque commutateur du dernier étage.

L'acheminement dépend de l'identité de la sortie destinataire. Un groupe d'une ou plusieurs (m) mailles est accessible à cet effet. Chaque commutateur de l'étage central aura ainsi T groupes d'une ou m sorties. Avec une donnée de position différente, ces commutateurs interpréteront la même information d'acheminement des cellules, de manière à sélectionner le groupe d'acheminement adéquat, dans le cas d'un acheminement de point à point, ou les groupes adéquats dans le cas d'un acheminement de point à multipoint intéressant des sorties de plusieurs commutateurs élémentaires différents du dernier étage. Selon le mode de réalisation de la figure 4, l'information de commande RCC considérée plus haut sera traduite, dans ces commutateurs élémentaires de l'étage central, en un signal de mode "groupe" RS, pour un acheminement de point à point, ou en un signal de mode "MC", pour un acheminement de point à multipoint, tandis que l'adresse de sortie RCA, ou le numéro de référence interne IRN, seront utilisés pour l'identification du ou des groupes de sorties sélectionnés.

Ce qui vaut pour les commutateurs élémentaires de l'étage central, relativement aux cas d'acheminement considérés, vaut également pour les commutateurs du dernier étage.

Dans le cas où m=2, par exemple, les commutateurs de l'étage central ont deux mailles avec chacun des commutateurs du premier et du dernier étage. Dans ce cas, les commutateurs élémentaires de l'étage central auront T groupes de deux sorties entre lesquelles il y aura lieu d'opérer une sélection.

Le nombre de commutateurs élémentaires de l'étage central peut, selon une autre variante, être supérieur à celui des commutateurs des deux étages extrêmes, toutes choses égales par ailleurs. Cela réduira la charge de trafic des mailles internes du réseau de commutation. En repartant de l'exemple précédent (m=2), l'étage central pourrait comprendre 64 commutateurs élémentaires, et, corrélativement, les commutateurs des deux étages extrêmes auraient 128 sorties ou entrées.

On peut encore envisager que, pour un dimensionnement donné du réseau de la figure 5, en nombre de commutateurs élémentaires par étage et nombre de liaisons par mailles entre eux, certaines liaisons d'entrée à vitesse de transmission supérieure à celle qui est pratiquée dans le réseau de commutation, soit couplées à plusieurs ports d'entrée sur lesquels les cellules de cette liaison externe sont distribuées ; celles-ci sont ensuite transférées individuellement par la multiplicité de chemins possibles vers les ports de sortie destinataires. En généralisant, cela peut permettre de réaliser un réseau de commutation dont la vitesse de transmission et de commutation serait inférieure à celle des liaisons de transmission externes qu'il dessert. Bien entendu, ce que l'on vient de dire au sujet des liaisons d'entrée s'applique symétriquement aux liaisons de sortie où les cellules de plusieurs ports de sortie sont multiplexées vers la liaison externe sortante.

Le réseau de commutation unidirectionnel symétrique de la figure 6 comprend 4 étages. Les désignations des commutateurs élémentaires des deux étages extrêmes sont les mêmes qu'à la figure 5. Les commutateurs élémentaires des deux étages centraux sont respectivement référencés ASi1 à ASik et ASo1 à ASok.

Les commutateurs élémentaires des deux premiers étages forment une unité de sélection d'entrée USi, tandis que les commutateurs élémentaires des deux derniers étages forment une unité de sélection de sortie USo. Ces deux unités de sélection sont couplées l'une à l'autre par des mailles joignant les sorties et entrées homologues.

Tout ce qui a été exposé relativement au réseau de la figure 5 s'applique encore ici, en considérant que deux commutateurs élémentaires homologues des deux étages centraux n'en forment qu'un. Toutefois, du point de vue de la commande, les commutateurs élémentaires ASi1 à ASik seront avantageusement aménagés pour opérer une distribution, que le mode d'acheminement soit de point à point ou de point à multipoint. Les commutateurs ASo1 à ASok, quant à eux, du point de vue de la commande, seront traités comme les commutateurs élémentaires AS1 à ASk de la figure 5.

Le réseau de commutation de la figure 7 est semblable à celui de la figure 6, mais replié, donc bidirectionnel, confondant les commutateurs élémentaires des étages extrêmes, TSi1 à TSiT et TSo1 à TSoT, en commutateurs du premier étage TS1 à TST, tandis que l'on a repris la désignation des commutateurs du deuxième étage de la figure 5, AS1 à ASk, pour les commutateurs élémentaires du deuxième étage de la figure 7.

Les entrées des commutateurs du premier étage sont partagées entre les ports d'entrée et les ports de sortie du réseau de connexion (par moitiés pour un réseau sans expansion/concentration). Les mailles internes sont doubles, comportant une ou plusieurs liaisons pour chaque direction d'acheminement. Les commutateurs sont bidirectionnels et ils accomplissent la réflexion, soit dans le premier étage, soit dans le deuxième étage.

Dans l'acheminement d'une cellule d'une entrée du commutateur élémentaire TS1 à une ou plusieurs sorties d'un autre commutateur TST, que ce soit dans le cadre de l'acheminement de point à point ou de point à multipoint, le commutateur TS1 accomplit une distribution vers l'ensemble des commutateurs de l'étage suivant, tandis que celui des commutateurs du deuxième étage qui achemine la cellule applique le mode d'acheminement "groupe" ou "diffusion" et qu'il en va de même en ce qui concerne 1e commutateur élémentaire TST. Dans le cas d'un transfert de cellule d'une entrée du commutateur élémentaire TS1 vers une ou plusieurs sorties de ce même commutateur TS1, une réflexion de transfert peut être opérée directement au niveau du premier étage, c'est-à-dire dans le commutateur bidirectionnel TS1 qui transfère directement la cellule sur la ou les sorties destinataires, au lieu de la transférer normalement en distribution vers l'étage suivant.

Tout ce qui a été exposé concernant le réseau de la figure 5 s'applique donc aussi au réseau de la figure 7, moyennant les conversions nécessaires, compte tenu de la superposition des deux directions d'acheminement du trafic dans les commutateurs des deux étages et de l'exécution d'une réflexion dans les commutateurs du premier ou du deuxième étage.

En se reportant à la figure 3, les commutateurs du premier étage comprennent 16 entrées et 16 sorties connectées respectivement à des ports d'entrée et à des ports de sortie. Ils comprennent encore 16 entrées et 16 sorties connectées à 16/m commutateurs du deuxième étage, lorsque m est le nombre de mailles internes entre deux commutateurs appartenant respectivement à chacun de ces deux étages. Si le premier étage comprend 16 commutateurs (cas où m=1), 16 entrées et 16 sorties des commutateurs du deuxième étage sont respectivement connectées à ces 16 commutateurs du premier étage, par 16 mailles bidirectionnelles comprenant chacune une seule liaison dans chaque direction d'acheminement. Le trafic provenant de ces 16 entrées est alors réfléchi vers ces 16 sorties. Les autres 16 entrées et sorties des commutateurs du deuxième étage ne sont pas utilisées et sont disponibles pour une extension du réseau par addition d'un troisième étage. Si le premier étage comprend jusqu'à 32 commutateurs élémentaires, les 32 entrées et 32 sorties des commutateurs du deuxième étage fournissent les 32 mailles à deux liaisons, une dans chaque direction d'acheminement, qui sont nécessaire pour les atteindre.

Le mode de fonctionnement des commutateurs dans le traitement des deux directions d'acheminement a déjà été exposé en se référant aux figures 3 et 4.

On se reportera maintenant à la figure 8 qui représente un réseau de commutation dérivé de celui de la figure 5, mais ici obtenu par juxtaposition de deux réseaux de commutation unidirectionnels séparés mais homologues étage par étage, chacun permettant le transfert dans une direction donnée, des N1 entrées d'un côté vers les N2 sorties de l'autre côté, ou bien des N2 entrées de ce dernier côté vers les N1 sorties du premier côté. En fait un tel réseau de commutation peut être typiquement utilisé pour constituer un ensemble dissymétrique interconnectant N1 liaison bidirectionnelles d'un côté à N2 liaison bidirectionnelles de l'autre côté, avec N1>N2. Le réseau unidirectionnel de N1 vers N2 réalise donc une concentration de trafic et l'autre réseau unidirectionnel de N2 vers N1 une expansion de trafic. Chacun de ces réseaux unidirectionnels ne diffère donc de celui de la figure 1 que par le fait qu'il est dissymétrique en raison de la présence d'au moins un étage de commutateurs élémentaires dissymétriques, c'est-à-dire dont les nombres d'entrées et de sorties sont différents, par exemple 32x16 ou 16x32. A part cette variante de configuration, les principes d'acheminement décrits pour chaque étage du réseau de la figure 5 restent applicables aux étages correspondants dans chacun de ces deux réseaux unidirectionnels dissymétriques.

La figure 9 représente un équivalent du réseau de commutation de la figure 8, dans une configuration bidirectionnelle. Dans ce cas, le réseau de commutation dissymétrique interconnecte les N1 ports d'entrée et de sortie d'un côté aux N2 ports d'entrée et de sortie de l'autre côté. En supposant N1>N2, un tel réseau est appliqué typiquement à la concentration de N1 liaisons à relativement faible trafic vers N2 liaisons à plus fort trafic. Des transferts de cellules peuvent donc être effectués entre ces deux ensembles de ports N1 et N2, soit unidirectionnels, d'un port d'entrée de l'ensemble N1 (ou N2) vers un port de sortie de l'ensemble N2 (ou N1), soit bidirectionnels entre un port d'entrée et de sortie de l'ensemble N1 et un port d'entrée et de sortie de l'ensemble N2. De plus, la présence d'au moins un étage bidirectionnel permet également de transférer des cellules entre un port d'entrée et un port de sortie du même ensemble N1 (ou N2), en effectuant une réflexion dans un étage bidirectionnel. Du point de vue configuration, le dimensionnement de ce réseau est analogue à celui de la figure 8 ; comme dans ce dernier, au moins un des étages est dissymétrique, pour que le réseau de commutation présente des nombres de ports d'entrée et de sortie N1 et N2 différents de part et d'autre du réseau de commutation.

Les différentes séquences de transfert sont appliquées de la façon suivantes :

- Pour un transfert de cellule non réfléchi entre un port d'entrée d'un côté du réseau (ensemble N1 ou N2) et un port de sortie de l'autre côté du réseau (ensemble N2 ou N1), le premier étage distribue le trafic entrant sur l'ensemble des commutateurs de l'étage intermédiaire. Ensuite, ce dernier effectue un acheminement sélectif vers le dernier étage en transférant la cellule vers un ou plusieurs groupes de sorties conduisant à un ou plusieurs commutateurs du dernier étage. Dans ce dernier, un acheminement sélectif permet de transférer la cellule vers le ou les ports de sortie destinataires.

- Dans le cas d'un transfert réfléchi, entre un port d'entrée et un port de sortie du même ensemble N1 ou N2, la réflexion peut se produire dans le commutateur du premier étage, si les ports sont connectés au même commutateur et s'il est bidirectionnel. Dans le cas contraire, le commutateur du premier étage distribue la cellule vers l'un quelconque des commutateurs de l'étage intermédiaire, qui seront avantageusement bidirectionnels pour permettre ce type de transfert réfléchi par acheminement sélectif vers le ou les commutateurs du premier étage. Dans ce dernier un acheminement sélectif permet de transférer la cellule vers le ou les ports sortants destinataires.

La figure 10 représente une extension possible du réseau de commutation de la figure 9 par addition d'un étage de sélection supplémentaire. De plus, les deux premiers étages de commutateurs, du côté de l'ensemble des N1 ports d'entrée et de sortie, sont conformés en m unités de sélection à deux étages, à acheminement bidirectionnel, chacune semblable, au dimensionnement près, au réseau de la figure 7, les commutateurs élémentaires étant d'ailleurs identifiés par les mêmes références que dans cette dernière figure.

Mise à part l'addition d'un quatrième étage et l'organisation des deux premiers étages du côté de l'ensemble de ports NI, les types de transfert possibles dans un tel réseau de commutation dissymétrique bidirectionnel peuvent être aisément extrapolés de celui de la figure 9 :

- Un transfert de cellules non réfléchi entre un port d'entrée de l'ensemble N1 et un port de sortie de l'ensemble N2 est effectué par distribution de premier étage vers n'importe quel des commutateurs du second étage de l'unité de sélection, puis ce dernier effectue une distribution vers n'importe quel commutateur du troisième étage. Dans ce dernier, le commutateur effectue un acheminement sélectif vers un ou plusieurs des commutateurs du quatrième étage, ce dernier effectuant un acheminement sélectif vers un ou plusieurs ports de sortie de l'ensemble N2.

- Pour un transfert de cellules non réfléchi dans le sens opposé, de l'ensemble N2 vers l'ensemble N1, le premier étage distribue chaque cellule vers l'un des commutateurs de l'étage suivant. Dans ce sens de transfert, ce dernier effectue un acheminement sélectif vers une ou plusieurs des m unités de sélection à deux étages, tout en choisissant librement l'un des commutateurs du troisième étage dans chaque unité de sélection destinataire. Dans un commutateur du troisième étage, un acheminement sélectif transfère la cellule vers un ou plusieurs commutateurs du quatrième étage, ce dernier effectuant un acheminement sélectif vers un ou plusieurs ports de sortie de l'ensemble N1.

- Pour un transfert réfléchi entre un port d'entrée et un port de sortie du même ensemble N2 ou du même sous-ensemble N'1 d'une unité de sélection, la réflexion se produit soit au premier, soit au second étage comme dans le réseau de la figure 9.

- Par contre, pour un transfert réfléchi entre un port d'entrée et un port de sortie du même ensemble N1, mais de deux unités de sélection différentes, la réflexion n'est possible qu'au troisième étage qui interconnecte les m unités de sélection. Dans ce cas, le premier étage effectue une distribution vers les commutateurs du second étage ; ce dernier effectue également une distribution vers les commutateurs du troisième étage ; ce dernier réfléchit alors le transfert et effectue un acheminement sélectif vers une ou plusieurs unités de sélection destinataires, tout en laissant le choix libre entre les commutateurs du deuxième étage dans chaque unité de sélection concernée. Ensuite, le commutateur du deuxième étage effectue un acheminement sélectif vers un ou plusieurs commutateurs du premier étage, ce dernier effectuant un acheminement sélectif vers un ou plusieurs ports de sortie de l'ensemble N'1 destinataires.

Cet exemple de réseau de commutation illustre encore une fois le fait que, selon l'invention, les groupes de sorties constitués dans les commutateurs du réseau de commutation ne sont pas les mêmes selon l'étage auquel ils appartiennent et qu'il en est tenu compte dans le mode d'acheminement mis en oeuvre, au niveau de chaque étage, bien que l'information d'acheminement de la cellule reste la même dans tous les étages.

On se tournera ensuite vers la figure 11 qui représente un réseau de commutation unidirectionnel composé d'unités de sélection qui comprennent des unités terminales d'entrée TSUi, des plans de sélection PS et des unités terminales de sortie TSUo. Dans chaque unité de sélection, on trouve des commutateurs élémentaires qui peuvent être du type des figures précédentes, représentés chacun par le signe habituel d'une matrice de commutation, avec, à gauche, le nombre des entrées du commutateur élémentaire et, à droite, le nombre de ses sorties. Ces commutateurs élémentaires sont reliés entre eux par des mailles.

A l'intérieur d'une unité terminale d'entrée, TSUi1 par exemple, on trouve deux étages de commutateurs élémentaires, les commutateurs élémentaires TSi1 à TSi16 et les commutateurs élémentaires ASi1 à ASi4. Il existe en général une ou plusieurs mailles entre une sortie d'un commutateur élémentaire du premier étage et une entrée d'un commutateur élémentaire du deuxième étage. Les quatre sorties d'un commutateur du premier étage, TSi1 par exemple, sont alors connectées chacune à une ou plusieurs entrées de chacun des quatre commutateurs élémentaires du deuxième étage. Dans le cas d'une seule maille, les 16 entrées d'un commutateur élémentaire du deuxième étage, ASi1 par exemple, sont connectées chacune à une sortie de chacun des 16 commutateurs élémentaires du premier étage. Les 16 fois 4 entrées des commutateurs élémentaires du premier étage sont connectées à 64 ports d'entrée pi1 à pi64. Les autres unités terminales d'entrée peuvent être semblables, aux valeurs numériques indiquées près. Dans cet exemple, les unités terminales de sortie sont supposées être agencées de la même façon et symétriquement. C'est ainsi que l'unité terminale de sortie TSUo1, par exemple, donne accès, par les deux étages de commutateurs élémentaires comprenant les commutateurs élémentaires ASo1 à ASo4 et TSo1 à TSo16, à des ports de sortie po1 à po64.

La figure représente aussi des unités terminales d'entrée et de sortie TSUi128 et TSUo128, pour indiquer un nombre total d'unités terminales du réseau de commutation.

Les plans de sélection, tels que le plan de sélection PS1, comprennent trois étages de sélection formés des commutateurs élémentaires PSi1 à PSi32, PSc1 à PSc16, PSo1 à PSo32. L'arrangement des mailles internes entre un étage et le suivant obéit au principe de celui des unités de sélection terminales, en supposant dans cet exemple un nombre de mailles entre commutateurs égal à un ; on ne le décrira pas en détail.

Il est prévu 16 plans de sélection PS1 à PS16. Les 16 sorties d'un commutateur de deuxième étage d'une unité de sélection terminale d'entrée, TSUi1 par exemple, sont individuellement connectées, par 16 mailles, à une entrée de chacun des 16 plans de sélection. Les 4 sorties de même rang des quatre commutateurs élémentaires d'une unité terminale d'entrée, TSUi1 par exemple, sont connectées à des entrées successives d'un même commutateur élémentaire, PSi1, par exemple d'un plan de sélection, PS1 en l'occurence. Donc, les 512 entrées d'un plan de sélection, PS1 par exemple, sont connectées, quatre par quatre, au quatre commutateurs élémentaires du deuxième étage de chacune des 128 unités terminales d'entrée.

L'agencement des mailles entre les sorties des commutateurs élémentaires du troisième étage des plans de sélection, PSo1 à PSo32 pour le plan de sélection PS1 par exemple, et les entrées des commutateurs élémentaires du premier étage des unités terminales de sortie est symétrique de celui que l'on vient de décrire.

Lorsque l'ensemble du réseau de commutation est symétrique par rapport à l'étage central des plans de sélection, c'est-à-dire lorsque les nombres d'entrées et de sorties de commutateurs et les nombres de mailles homologues par symétrie centrale verticale sont identiques, il est possible de réaliser un réseau de commutation équivalent replié, avec des commutateurs bidirectionnels au moins pour une partie des étages, comme représenté sur la figure 12 et décrit plus loin. Chaque commutateur élémentaire central, tel que PSc1, est relié, par trois étages de commutation, de chaque côté, à tous les ports d'entrée et à tous les ports de sortie. Réciproquement, entre un port d'entrée quelconque et un port de sortie quelconque, il existe dans cet exemple plus de 4000 (4 k) trajets distincts passant par l'un des quatre commutateurs ASi de l'unité de sélection entrante, l'un des 16 plans de sélection PS, l'un des 16 commutateurs centraux PSc dans un plan, et l'un des quatres commutateurs ASo de l'unité de sélection sortante. Compte tenu de l'accessibilité totale de chaque port d'entrée à l'ensemble des commutateurs centraux PSc de l'ensemble des plans, le transfert dans cette première partie du réseau réalise une distribution généralisée de l'ensemble du trafic entrant sur l'ensemble des 16x16 commutateurs centraux PSc, donc un brassage complet de l'ensemble du trafic de cellules entrantes.

Ensuite, de l'étage central PSc aux ports de sortie, l'acheminement est nécessairement sélectif, pour atteindre le ou les ports de sortie de destination. S'il s'agit d'atteindre plusieurs ports de sortie distincts, dans un acheminement de point à multipoint, cet acheminement sélectif devra comprendre plusieurs branches à un ou plusieurs étages.

En se reportant maintenant aux descriptions qui précèdent, relatives en particulier aux figures 1 et 3, on va définir comment les différents modes d'acheminement sont appliqués dans les commutateurs élémentaires du réseau de la figure 11.

On considérera d'abord un acheminement de point à point, par exemple entre le port d'entrée pi1 et le port de sortie pol. Dans l'étiquette de la cellule, une donnée de mode d'acheminement du champ de commande RCC spécifie l'acheminement de point à point. L'adresse de sortie RCA comprend 7 bits désignant l'unité terminale TSUo1 et 6 bits désignant le port de sortie pol dans l'unité terminale.

Dans les commutateurs élémentaires du premier étage du réseau de commutation, tels que TSi1, les paramètres d'acheminement sont tels que la cellule est retransmise sur l'une parmi l'ensemble de toutes les sorties du commutateur élémentaire. On a vu les conditions de cette sélection antérieurement. Par exemple, la cellule est ainsi retransmise vers le commutateur élémentaire ASi1.

Dans les commutateurs élémentaires du deuxième étage du réseau de commutation, tels que ASi1, les paramètres d'acheminement ont le même effet que dans le premier étage et la cellule est ainsi retransmise sur l'une parmi l'ensemble de toutes les sorties du commutateur élémentaire, par exemple celle qui conduit vers le plan PS1 et donc, dans celui-ci, vers le commutateur élémentaire PSi1.

Il en va encore de même dans les commutateurs élémentaires du troisième étage du réseau de commutation et la cellule parvient par exemple au commutateur élémentaire PSc1.

A partir de l'étage central, l'acheminement devient sélectif, au moins en partie.

Les paramètres d'acheminement des commutateurs de l'étage central du réseau de commutation sont tels que le commutateur PSc1 sélectionne un groupe de quatre unités terminale dans lequel se trouve l'unité terminale de destination, sur la base de 5 bits, parmi les 7 bits de désignation de l'unité de sélection terminale, qui désignent le groupe d'acheminement, dans l'exemple présent une sortie unique, conduisant vers celui des 32 commutateurs élémentaires du quatrième étage du réseau de commutation qui, dans le plan PS1, accède à l'unité terminale de destination. Ainsi est sélectionnée une maille conduisant vers le commutateur élémentaire PSo1.

Le mode de fonctionnement est semblable à celui que l'on vient de voir, dans les commutateurs élémentaires du cinquième étage du réseau de commutation. Les paramètres d'acheminement sont différents ; ils provoquent la sélection des 2 bits restants de l'identité de l'unité terminale de destination, ce qui identifie un groupe d'acheminement comprenant les quatre sorties conduisant vers les quatre commutateurs élémentaires ASo1 à ASo4, selon l'exemple considéré. Une de ces quatre sorties est sélectionnée de la façon évoquée précédemment. Elle conduit la cellule, par exemple, jusqu'au commutateur ASo1.

Dans les commutateurs élémentaires du sixième étage du réseau de commutation, les paramètres d'acheminement sélectionnent, parmi les 6 bits de l'adresse RCA désignant le port de sortie, les 4 bits identifiant le commutateur élémentaire du dernier étage desservant ce port de sortie. La cellule est ainsi conduite jusqu'au commutateur élémentaire TSo1, conformément à l'exemple choisi.

Finalement, de manière similaire, dans le commutateur élémentaire du dernier étage du réseau de commutation, les paramètres d'acheminement permettront de transférer la cellule vers le port de sortie po1.

Lors de cette séquence de transfert point à point, les paramètres d'acheminement des commutateurs élémentaires des différents étages ont donc d'abord permis de conduire la cellule de manière non-sélective vers un commutateur élémentaire quelconque de l'étage central, puis de la conduire, de manière sélective, en exploitant des parties successives de l'adresse de sortie RCA, vers la destination indiquée.

Il est facile de vérifier que, dans la mesure où tous les commutateurs élémentaires de l'étage central, dans un plan de sélection, voient les 32 commutateurs élémentaires du cinquième étage de ce plan de sélection de la même façon, l'acheminement est identique dans chacun d'eux. De même, dans la mesure où tous les plans de sélection voient les unités terminales de sortie de la même façon, on peut conclure que tous les commutateurs élémentaires de l'étage central effectuent l'acheminement de la même façon. Un raisonnement similaire aboutit à la même conclusion en ce qui concerne les commutateurs élémentaires des autres étages, du cinquième au dernier. La conclusion est que , dans un tel exemple de réseau de commutation replié, les paramètres d'acheminement dépendent seulement de l'identité de l'étage dans lequel est inclus le commutateur élémentaire, non de sa position dans l'étage.

Par contre, ils pourraient dépendre également de la position du commutateur élémentaire dans l'étage, dans certaines variantes de ce type de réseau de commutation, par exemple telles que l'ensemble des unités terminales ou l'ensemble des plans de sélection n'est pas composé d'unités de sélection de configurations identiques, comme c'est le cas, par exemple, lors des opérations d'extension de réseau de commutation nécessitant un basculement progressif d'une configuration à une autre.

Par ailleurs, il convient de souligner que des cellules successives, d'une même provenance et avec une même destination peuvent, principalement grâce à l'acheminement de brassage pratiqué dans les premiers étages du réseau de commutation, emprunter un grand nombre de trajets différents, ce qui réalise un brassage des courants de trafic réguliers et irréguliers, favorable à l'écoulement plus homogène des débits de cellules variés soumis au réseau de commutation et donc aux performances relatives du transfert des cellules.

L'acheminement de point à multipoint, dans un tel réseau s'effectue sur les mêmes bases, si ce n'est que dans certains ou tous les étages à acheminement sélectif, il se produit une multiplication de la cellule avec retransmission sur des groupes de sorties différents dans les commutateurs de l'étage où l'arbre de diffusion indique que plusieurs branches sortantes sont requises vers l'étage suivant.

Cet exemple illustre comment des transferts point à multipoint selon des arbres de diffusion préétablis peuvent être mis en oeuvre selon l'invention dans des réseaux à trajets multiples et à auto-acheminement, tout en conservant pour ce type de transfert la possibilité de choisir un trajet de un vers plusieurs ports quelconques parmi la multiplicité de trajets possibles à travers le réseau de commutation, grâce à une organisation caractéristique du contenu des mémoires d'arbres de diffusion des commutateurs élémentaires des différents étages. Selon l'invention, il est possible de définir les points de branchement correspondant de telle sorte qu'aucune copie inutile ne soit générée à un étage quelconque, ce qui permet d'éviter toute surcharge interne des mailles internes entre étages. Cette caractéristique est réalisée selon les principes suivants :

- l'absence de copie dans les étages de distribution;
- le même contenu (points de branchements) de mémoire d'arbre de diffusion dans tous les commutateurs d'un étage qui appartiennent à un même ensemble de trajets multiples équivalents pour acheminer les cellules vers les groupes de commutateurs de l'étage suivant ;
- dans ces commutateurs "équivalents" qui effectuent un acheminement sélectif sur différents groupes d'acheminement distincts, un branchement vers plusieurs groupes d'acheminement prédéterminés (dans la mémoire d'arbre de diffusion) est effectué en transférant une copie de la cellule entrante seulement sur les groupes d'acheminement marqués comme branchements requis dans ces commutateurs parmi l'ensemble des groupes d'acheminement possibles. Ainsi, aucune copie inutile n'est générée à chaque étage.

La figure 12 représente la version repliée du réseau de la figure 11, obtenue en utilisant au moins pour une partie des étages des commutateurs bidirectionnels, sauf pour l'étage central PSc qui reste unidirectionnel. De par l'analogie des notations utilisées, il est clair que les commutateurs homologues peuvent être maintenant confondus en étages bidirectionnels, à savoir :

- les étages précédents 1 et 7 (TSi et TSo) deviennent le premier étage bidirectionnel (TS),
- les étages précédents 2 et 6 (ASi et ASo) deviennent le second étage bidirectionnel (AS),
- les étages précédents 3 et 5 (PSi1 et PSo1) deviennent le troisième étage bidirectionnel (PSa).

Par contre, l'étage central PSc reste unidirectionnel et ce quatrième étage est appelé étage miroir (réflexion obligatoire).

L'ensemble des caractéristiques et propriétés du réseau unidirectionnel de la figure 11 peut être aisément transposé à celui de la version repliée :

- Le même nombre de trajets possibles existe, sans compter les trajets additionnels rendus possibles par les réflexions intermédiaires décrites plus loin.
- Les deux grandes étapes, lors du transfert d'une cellule, distribution générale, puis acheminement sélectif, sont également réalisées en se référant maintenant à une première partie de transfert dans le sens entrant jusqu'à l'étage de réflexion et à une deuxième partie de transfert dans le sens sortant depuis ce dernier jusqu'au premier étage, les opérations d'acheminement à chaque étage se transposant aisément par symétrie et étant basées sur les mêmes principes que ceux qui ont été décrits pour le réseau de la figure 11.

Cependant, la variante repliée de la figure 12 présente les caractéristiques additionnelles suivantes dérivées des facultés intrinsèques de réflexion possible dans un commutateur bidirectionnel tel que décrit précédemment :

- Dans la première étape d'un transfert de point à point, où la cellule est librement distribuée dans le sens entrant vers l'un des commutateurs de l'étage suivant, à chaque étage bidirectionnel, potentiellement TS, AS et PSa, une réflexion prématurée est possible chaque fois que le port de sortie destinataire est accessible par le commutateur considéré, et bien sûr si ce dernier est bidirectionnel. Une telle réflexion prématurée est donc possible :

    - au premier étage TS si le port destinataire appartient au groupe de ports raccordés au commutateur considéré TSx,
    - au second étage AS si le port destinataire appartient à l'unité terminale dans laquelle se trouve le commutateur considéré ASx,
    - au troisième étage PSa si le port destinataire appartient au groupe de 4 unités terminales auquel le commutateur considéré TSax est raccordé.

- Lesdites possiblités de réflexion prématurée induisent les propriétés caractéristiques suivantes :

    - un allègement relatif de la charge des mailles internes dans la mesure où une partie du trafic de cellules ne traverse pas tous les étages du réseau de commutation,

- un accroissement du nombre de trajets possibles, à savoir les trajets réfléchis prématurément,
- la possibilité de sous-équiper le réseau de commutation de la figure en nombre d'étages et de procéder à des extensions successives d'étages sans modification de câblage entre étages, dans la mesure où chaque étage bidirectionnel 1, 2 ou 3 peut temporairement constituer le dernier étage équipé et effectuer alors les réflexions obligatoires d'un étage miroir.

Il est bien évident que les descriptions qui précèdent n'ont été données qu'à titre d'exemple non limitatif et que de nombreuses variantes peuvent être imaginées, sans sortir pour autant du cadre de l'invention. Les précisions numériques, en particulier peuvent changer avec chaque cas d'application.

## Revendications

1. Réseau de commutation à auto-acheminement par cellules et à trajets multiples pour la commutation de cellules à multiplexage temporel asynchrone comprenant :

   - des ports d'entrée,
   - des ports de sortie,
   - des commutateurs élémentaires (TSi1..., AS1..., TSr1...) arrangés en plusieurs étages de commutateurs élémentaires interconnectés,
   - chaque commutateur élémentaire ayant des entrées (I1...) et des sorties (o1..) et étant agencé pour transférer une cellule de longueur fixe ou variable reçue sur l'une de ses entrées, sur une ou plusieurs de ses sorties, en fonction d'informations d'acheminement (CCH) associées à ladite cellule,
   - les ports d'entrée du réseau correspondant aux entrées des commutateurs élémentaires d'un premier étage et les ports de sortie du réseau correspondant aux sorties des commutateurs élémentaires d'un dernier étage, caractérisé en ce que
   - chaque commutateur élémentaire d'un étage au moins du réseau possède au moins trois sorties,
   - ces sorties sont arrangées en groupes de sorties,
   - un groupe de sorties,comprend une ou plusieurs sorties déterminées,
   - en fonction de données d'acheminement (IRN, RCA, RCC) associées à une cellule reçue sur l'une quelconque de ses entrées, le commutateur élémentaire est agencé pour identifier (RMD) un ensemble comprenant un ou plusieurs desdits groupes de sorties,
   - le commutateur élémentaire est agencé pour transférer ladite cellule reçue, sur une sortie sélectionnée parmi les sorties du groupe unique dudit ensemble, ou des sorties, une par groupe dudit ensemble, chacune sélectionnée parmi les sorties du groupe auquel elle appartient.

2. Réseau de commutation conforme à la revendication 1, caractérisé en ce que les commutateurs élémentaires de deux étages au moins (TS1..; AS1..) possèdent les caractéristiques indiquées dans la partie caractérisante de la revendication 1, en ce que l'arrangement des sorties en groupes n'est pas nécessairement le même dans chacun de ces deux étages au moins et en ce que les commutateurs de chacun de ces étages sont agencés pour détenir chacun des paramètres d'acheminement propres (RCCTM), dérivés d'une donnée de position dépendant de l'étage dans lequel il se trouve, ces paramètres différents permettant d'appliquer des arrangements différents dans les commutateurs élémentaires des deux étages considérés.

3. Réseau de commutation conforme à la revendication 1, caractérisé en ce que les commutateurs élémentaires de deux étages au moins (TS1...; AS1...) possèdent les caractéristiques indiquées dans la partie caractérisante de la revendication 1, en ce que l'arrangement des sorties en groupes n'est pas nécessairement le même dans chacun de ces deux étages au moins et en ce que les commutateurs de chacun de ces étages sont agencés pour détenir chacun des paramètres d'acheminement propres (RCCTM), dérivés d'une donnée de position dépendant de l'étage dans lequel il se trouve et de son emplacement dans l'étage, ces paramètres différents permettant d'appliquer des arrangements différents dans les commutateurs élémentaires des deux étages considérés.

4. Réseau de commutation conforme à la revendication 2 ou 3, caractérisé en ce que lesdites informations d'acheminement (CCH) sont interprétées dans chaque étage pour déterminer le mode de transfert (MT) d'une cellule reçue vers les sorties du commutateur élémentaire, et en ce que ladite interprétation s'effectue en fonction desdits paramètres d'acheminement.

5. Réseau de commutation conforme à l'une quelconque des revendications 1 à 4, caractérisé en ce que les commutateurs élémentaires de certains étages du réseau au moins comprennent des moyens pour interpréter des informations d'acheminement, contenues dans une étiquette d'acheminement d'une cellule (CCH), qui comprennent un code de commande d'acheminement (RCC) définissant la séquence de transfert requis pour la cellule, à travers le réseau de commutation, une adresse de port de sortie (RCA), pour un acheminement de point à point, et/ou un numéro de référence interne d'arbre de diffusion (IRN), pour un acheminement de point à multipoint.

6. Réseau de commutation conforme à la revendication 5, caractérisé en ce que les commutateurs élémentaires considérés, interprétant ledit code de commande d'acheminement (RCC) en fonction desdits paramètres d'acheminement, sont prévus pour mettre en oeuvre en conséquence un mode d'acheminement (MT) qui peut être, entre autres, un acheminement de point à point (RS) ou un acheminement de point à multipoint (MC).

7. Réseau de commutation conforme à l'une quelconque des revendications 1 à 6, caractérisé en ce que les commutateurs élémentaires d'un étage au moins sont dissymétriques et réalisent chacun une expansion du trafic entrant de l'étage, réduisant la charge de trafic de cellules des sorties de ces commutateurs élémentaires par rapport à leurs entrées.

8. Réseau de commutation conforme à l'une quelconque des revendications 1 à 6, caractérisé en ce que les commutateurs élémentaires d'un étage au moins sont dissymétriques et réalisent chacun une concentration de trafic sortant de l'étage, augmentant la charge de trafic de cellules des sorties de ces commutateurs élémentaires par rapport à leurs entrées.

9. Réseau de commutation conforme aux revendication 7 et 8, caractérisé en ce que l'expansion est réalisée par au moins l'un des premiers étages (TSM...) et la concentration par au moins l'un des derniers étages (TSo1...), assurant ainsi une réduction de charge de trafic à l'intérieur du réseau de commutation entre ces deux types d'états à commutateurs dissymétriques.

10. Réseau de commutation conforme à la revendication 9, caractérisé en ce que le taux d'expansion dans au moins un des premiers étages est exactement compensé par le taux de concentration dans au moins un des derniers étages, réalisant ainsi un réseau de commutation symétrique ayant le même nombre de ports d'entrée et de sortie.

11. Réseau de commutation conforme à l'une quelconque des revendications 1 à 6, caractérisé en ce que les commutateurs élémentaires de tous les étages, sont symétriques, ayant le même nombre d'entrées et de sorties, et en ce que le réseau de commutation est par suite également symétrique, ayant le même nombre de ports d'entrée et de ports de sortie.

12. Réseau de commutation conforme à l'une quelconque des revendications 5 à 11, caractérisé en ce que les commutateurs élémentaires (ISE, Fig. 3) de certains des étages aux moins d'un réseau de commutation à plusieurs étages acheminent des cellules appartenant à deux courants de trafic opposés, en ce que, dans chacun de ces commutateurs élémentaires dits commutateurs bidirectionnels, les entrées sont réparties en deux ensembles d'entrées (I1..., I16 ; I17...I32) et les sorties en deux ensembles de sorties (01...,016 ; 017..., 032), un courant de trafic étant normalement acheminé d'un premier ensemble d'entrées à un premier ensemble de sorties et l'autre courant de trafic d'un deuxième ensemble d'entrées à un deuxième ensemble de sorties, en ce que l'interprétation des informations d'acheminement dans le commutateur élémentaire tient compte du courant de trafic (I0, Fig. 4) auquel elles appartiennent.

13. Réseau de connexion conforme à l'une quelconque des revendications 4 à 11, caractérisé en ce que les commutateurs élémentaires de tous les étages du réseau de commutation sont unidirectionnels, acheminant des cellules appartenant à un seul courant de trafic acheminées des entrées de chacun de ces commutateurs élémentaires à leurs sorties.

14. Réseau de connexion conforme à la revendication 13, caractérisé en ce qu'il comprend trois étages au moins, chaque commutateur élémentaire d'un étage, sauf le dernier, étant connecté par une ou plusieurs mailles à chaque commutateur élémentaire de l'étage suivant et chaque commutateur élémentaire d'un étage, sauf le premier, étant connecté par une ou plusieurs mailles à chaque commutateur élémentaire de l'étage précédent.

15. Réseau de commutation conforme à la revendication 13, caractérisé en ce qu'il comprend au moins une unité de sélection d'entrée (USi, Fig. 6) et au moins une unité de sélection de sortie (USr), formées chacune de commutateurs élémentaires agencés en deux étages au moins et dans chacune desquelles chaque commutateur d'un étage, sauf le dernier, est connecté par une ou plusieurs mailles à chaque commutateur élémentaire de l'étage suivant et chaque commutateur élémentaire d'un étage, sauf le premier, est connecté par une ou plusieurs mailles à chaque commutateur élémentaire de l'étage précédent, les unités de sélection d'entrée étant disposées en tandem avec les unités de sélection de sortie, les ports d'entrée étant connectés aux entrées des unités de sélection d'entrée et les ports de sortie aux sorties des unités de sélection de sortie.

16. Réseau de commutation conforme à la revendication 15, caractérisé en ce que des unités de sélection dites plans de sélection (PS1..., PS16, Fig. 11 ou 12) connectent chacune des sorties d'unité de sélection d'entrée à des entrées d'unité de sélection de sortie.

17. Réseau de commutation conforme à l'une quelconque des revendications 5 à 16, caractérisé en ce que, dans les commutateurs élémentaires d'un étage au moins, l'un desdits groupes de sorties comprend toutes les sorties du commutateur élémentaire, dans le cas d'un commutateur élémentaire unidirectionnel, ou alors toutes les sorties de l'un des deux ensembles de sorties pour l'une des deux directions de transfert, dans le cas d'un commutateur élémentaire bidirectionnel, pour une distribution général (DI, Fig 4) du trafic entrant sur toutes les sorties de ce commutateur dans la direction de transfert entrante.

18. Réseau de commutation conforme à la revendication 12, caractérisé en ce qu'il est configuré en réseau replié extensible, possédant au moins deux étages dont l'un au moins est bidirectionnel (Fig. 7) et, lorsque c'est le cas pour le premier étage, les ports d'entrée étant connectés aux entrées dudit premier ensemble d'entrées des commutateurs élémentaires d'un premier étage et les ports de sortie étant connectés aux sorties dudit deuxième ensemble de sorties de ces mêmes commutateurs élémentaires du premier étage, le dernier étage étant composé de commutateurs élémentaires unidirectionnels qui acheminenent un courant de trafic entrant vers les commutateurs de l'étage précédent, réalisant ainsi une réflexion de trafic.

19. Réseau de commutation conforme à la revendication 12, caractérisé en ce qu'il est configuré en réseau replié extensible, possédant au moins trois étages (fig 9), dont l'un au moins est bidirectionnel et, lorsque ce n'est pas le cas pour le premier étage, alors constitué de deux ensembles de commutateurs homologues unidirectionnels, l'un entrant, l'autre sortant, les ports d'entrée étant connectés aux entrées dudit ensemble de commutateurs unidirectionnels entrant du premier étage et les ports de sortie étant connectés aux sorties dudit ensemble de commutateurs unidirectionnels sortant du même premier étage, le dernier étage étant composé de commutateurs élémentaires unidirectionnels qui acheminent un courant de trafic entrant vers les commutateurs de l'étage précédent, réalisant ainsi une réflexion.

20. Réseau de commutation conforme à la revendication 18, caractérisé en ce que chaque commutateur élémentaire d'un étage, sauf le dernier, est connecté par une ou plusieurs mailles à chaque commutateur élémentaire de l'étage suivant et chaque commutateur élémentaire d'un étage, sauf le premier, est connecté par une ou plusieurs mailles à chaque commutateur élémentaire de l'étage précédent.

21. Réseau de commutation conforme à la revendication 18 ou 19, caractérisé en ce qu'il comprend trois étages au moins (fig. 10) et en ce que les deux premiers étages au moins sont constitués d'unités de sélection d'entrée et de sortie formées chacune de commutateurs élémentaires agencés en deux étages au moins et dans chacune desquelles chaque commutateur élémentaire d'un étage, sauf le dernier, est connecté par une ou plusieurs mailles à chaque commutateur élémentaire de l'étage suivant et chaque commutateur élémentaire d'un étage, sauf le premier, est connecté par une ou plusieurs mailles à chaque commutateur élémentaire de l'étage précédent.

22. Réseau de commutation conforme à la revendication 21, caractérisé en ce que les unités de sélection d'entrée et de sortie sont interconnectées par au moins deux plans de sélection (PS1..., PS16, fig. 11,12), chacun comprenant un arrangement d'un ou plusieurs étages selon la capacité requise pour le réseau de commutation.

23. Réseau de commutation conforme à la revendication 22, caractérisé en ce que l'augmentation de la capacité dudit réseau extensible est réalisée par addition d'étages successifs et sans modification de câblage entre étages, chaque configuration intermédiaire de moins grand nombre d'étages utilisant comme dernier étage équipé un étage de commutateurs élémentaires bidirectionnels qui peuvent effectuer une réflexion de dernier étage du réseau replié.

24. Réseau de commutation conforme à l'une quelconque des revendications 4 à 12 et 18 à 23, caractérisé en ce que les commutateurs élémentaires d'un ou plusieurs des premiers étages du réseau de commutation sont agencés pour que, dans la direction d'acheminement correspondant au trafic entrant et lorsque les données d'acheminement spécifient un acheminement de point à point et/ou un acheminement de point à multipoint, et compte tenu desdits paramètres d'acheminement, il soit procédé à la distribution générale (DI) du trafic entrant.

25. Réseau de commutation conforme à l'une quelconque des revendication précédente, caractérisé en ce que, dans un commutateur élémentaire, toute cellule devant être transférée à l'une des sorties d'un groupe de sorties sélectionné, est fournie sur l'une quelconque des sorties de ce groupe.

26. Réseau de commutation conforme à la revendication 25, caractérisé en ce que ladite sélection, entre les sorties d'un groupe d'acheminement, s'effectue de manière à équilibrer la charge de cellules sur les différentes sorties de ce groupe.

27. Réseau de commutation conforme à la revendication 24 ou 26, caractérisé en ce que ladite sélection s'effectuant de manière à équilibrer la charge de cellules sur les différentes sorties de ce groupe est basée sur un processus de distribution quasi ou pseudo-aléatoire visant à une décorrélation entre la répartition des cellules sur les entrées et la répartition des cellules sur les sorties du commutateur élémentaire.

28. Réseau de commutation conforme à la revendication 13, caractérisé en ce qu'il comprend deux réseaux unidirectionnels dissymetriques à trois étages homologues (fig. 8), le premier interconnectant N1 ports d'entrée à N2 ports de sorties, le second interconnectant N2 ports d'entrée à N1 ports de sortie, juxtaposés de façon à réaliser l'équivalent d'un réseau de commutation interconnectant dans les deux sens de trafic, d'un côté N1 ports d'entrée et de sortie et, de l'autre, N2 ports de sortie et d'entrée.

29. Réseau de commutation conforme à la revendication 12, caractérisé en ce qu'il comprend trois étages au moins dont l'un au moins est bidirectionnel (fig 9), arrangés pour constituer un réseau bidirectionnel non replié interconnectant un premier ensemble de N1 ports d'entrée et de sortie et un deuxième ensemble de N2 ports de sortie et d'entrée, en ce que chaque commutateur élémentaire d'un étage interne est connecté aux commutateurs élémentaires des étages précédent et suivant par une ou plusieurs mailles et chaque commutateur élémentaire d'un étage d'extrémité est connecté d'un côté aux commutateurs élémentaires de l'étage adjacent et, de l'autre, à l'un des ensembles ports d'entrée et de sortie, et en ce que les cellules sont transférées entre un port d'entrée et un port de sortie appartenant soit aux deux ensembles de ports différents, par transfert à travers les trois étages, soit appartenant au même ensemble de ports par transfert réfléchi dans d'un des commutateurs élémentaires d'un étage bidirectionnel permettant l'interconnexion de ces deux ports.

30. Réseau de commutation conforme à la revendication 29, caractérisé en ce qu'il comprend au moins quatre étage (fig. 10), en ce que les deux premiers étages au moins, proches de l'ensemble des N1 ports d'entrée et de sortie, sont constitués d'unités de sélection d'entrée et de sortie (TSU1..., TSUn) formées chacune de commutateurs élémentaires agencés en deux étages au moins, en ce qu'un étage au moins, proche de l'ensemble des N2 ports d'entrée et de sortie interconnecte, d'une part, cet ensemble de N2 ports et, d'autre part, les unités de sélection donnant accès audits N1 ports, et en ce que les commutateurs élémentaires d'étages successifs sont interconnectés par une ou plusieurs mailles.

31. Réseau de commutation conforme à l'une quelconque des revendications précédentes, caractérisé en ce que l'ordre des cellules, susceptible d'être modifié après transfert dans le réseau de commutation suivant des trajets différents, est rétabli par un circuit de rétablissement d'ordre de cellules prévu dans chaque port de sortie du réseau de commutation.

32. Réseau de commutation conforme à la revendication 31, caractérisé en ce que des liaisons externes à débit relativement élevé sont connectées à plusieurs ports du réseaux de commutation, ces ports fonctionnant à débit moins élevé, en ce que les cellules entrantes d'une telle liaison à haut débit sont distribuées sur les différents ports d'entrée auxquels elle est raccordée, et en ce que les cellules destinées à une telle liaison à haut débit sortante sont acheminées dans le réseau de commutation vers le groupe de ports de sortie auxquels elle est raccordée, les cellules de ces ports de sortie étant multiplexées au débit plus élevé de la liaison sortante après rétablissement de l'ordre des cellules sur l'ensemble des ports de sortie de la liaison sortante considérée.

33. Réseau de commutation conforme à la revendication 16 ou 22, caractérisé en ce que le nombre desdits plans de sélection est dimensionné en fonction de la plus élevée des charges de trafic de cellules moyennée sur l'ensemble des ports d'entrée et de sortie de chaque unité de sélection, la prise en compte uniquement de ces valeurs moyennes étant rendu possible par la distribution du trafic sur une multiplicité de trajets dans chaque unité de sélection.

34. Réseau de commutation conforme à la revendication 6, caractérisé en ce qu'il comprend des commutateurs élémentaires disposant d'une mémoire de points de branchement (MCM) et en ce que les identités des groupes de sorties correspondant aux branchements à effectuer dans un commutateur élémentaire, lorsqu'il doit effectuer un mode d'acheminement de point à multipoint est obtenu par la lecture de la mémoire de points de branchement à l'aide dudit numéro de référence interne d'arbre de diffusion (IRN).

35. Réseau de commutation conforme à la revendication 24 ou 34, caractérisé en ce que le contenu des mémoires de points de branchement (MCM) des commutateurs élémentaires des différents étages est marqué de telle façon que seules celles des commutateurs élémentaires effectuant un acheminement sélectif contiennent des indications de branchement nécessaires à l'étage considéré pour l'arbre de diffusion considéré, en ce que, en conséquence, aucune indication de branchement n'est marquée dans les commutateurs élémentaires des étages effectuant une distribution générale du trafic, et en ce que les différents commutateurs élémentaires qui appartiennent à un ensemble de commutateurs élémentaires équivalents en ce qui concerne les trajets internes entre étages, possèdent le même contenu de points de branchement pour chaque arbre de diffusion, permettant ainsi d'éviter la génération de copies de cellules inutiles dans le réseau de commutation.

36. Réseau de commutation conforme à la revendication 34, caractérisé en ce que ledit arbre de diffusion (IRN) ne dépend pas du port d'entrée, mais uniquement de l'ensemble des ports de sortie vers lesquels une cellule provenant d'un port d'entrée quelconque doit être transférée.

37. Réseau de commutation conforme à l'une quelconque des revendications précédentes, caractérisé en ce qu'une partie au moins des commutateurs élémentaires est remplacée par des modules de commutation chacun d'eux étant composé de plusieurs commutateurs élémentaires agencés de telle façon que ledit module de commutation présente au niveau de ses d'accès d'entrée et de sortie les caractéristiques et performances d'un commutateur élémentaire virtuel unique de plus grosse taille en nombres d'entrée et de sortie et dispose des fonctionalités précédement citées.

38. Réseau de commutation conforme à l'une quelconque des revendications précédentes, caractérisé en ce que lesdites cellules sont des paquets.

39. Réseau de commutation conforme à l'une quelconque des revendications précédentes, caractérisé en ce que lesdites cellules sont des cellules de longueur fixe ou variable composées d'un certain nombre de sous-cellules de longueur fixe.

40. Réseau de commutation conforme à l'une quelconque des revendications précédentes, caractérisé en ce que lesdites informations d'acheminement (CCH) associées à la cellule sont contenues dans la cellule même.

**Claims**

1. Cellular, multiple path, self-routing switching network for switching time division multiplex cells comprising:

- input ports,
- output ports,
- switching elements (TSi1, ..., AS1, ..., TSo1, ...) arranged in several stages of interconnected switching elements,
- each switching element having inlets (I1, ...) and outlets (01, ...), arranged to transfer a cell of fixed or variable length received on one of its inlets to one or more of its outlets, according to routing information (CCH) associated with said cell,
- the network's input ports corresponding to the inlets of the switching elements of a first stage and the network's output ports corresponding to the outlets of the switching elements of a last stage,

characterised in that

- each switching element of at least one stage of the network has at least three outlets,
- these outlets are arranged in groups of outlets,
- a group of outlets comprises one or more determined outlets,
- on the basis of routing information (IRN, RCA, RCC) associated with a cell received at any one of its inlets, the switching element is constructed to identify (RMD) a set comprising one or more of said groups of outlets,
- the switching element is constructed to transfer said received cell to a selected outlet of the outlets of the single group of said set, or one outlet per group of the outlets of said set, each selected from the outlets of the group to which it belongs.

2. Switching network according to claim 1, characterised in that the switching elements of at least two stages (TS1, ...; AS1, ...) have the characteristics indicated in the characterising part of claim 1, in which the arrangement of the outlets in groups is not necessarily the same in each of these at least two stages and wherein the switching elements of each of these stages are constructed for each to hold its own routing parameters (RCCTM), derived from position information depending on the stage in which it is located, these different parameters being used to apply different arrangements in the switching elements of the two stages in question.

3. Switching network according to claim 1 characterised in that the switching elements of at least two stages (TS1, ... ; AS1, ...) possess the characteristics indicated in the characterising part of claim 1, in that the arrangement of the outlets into groups is not necessarily the same in each of these at least two stages and in that the switching elements of each of these stages are constructed for each to hold its own routing parameters (RCCTM), derived from position information depending on the stage in which it is located and on its location in the stage, these different parameters being used to apply different arrangements in the switching elements of the two stages in question.

4. Switching network according to claim 2 or 3, characterised in that said routing information (CCH) is interpreted in each stage to determine the mode (MT) of transferring a received cell to the outlets of the switching element, and in that said interpretation is based on said routing parameters.

5. Switching network according to any of claims 1 to 4, characterised in that the switching elements of at least certain stages of the network include means for interpreting routing information contained in a routing tag (CCH) of a cell, which include a routing control code (RCC) defining the required sequence for transferring the cell across the switching network, an output port address (RCA), for a point-to-point routing, and/or a multicast tree internal reference number (IRN) for a point-to-multipoint routing.

6. Switching network according to claim 5, characterised in that the switching elements in question, interpreting said routing command code (RCC) on the basis of said routing parameters, are designed to implement a routing mode (MT) as a result thereof which can be, amongst others, a point-to-point routing (RS) or a point-to-multipoint routing (MC).

7. Switching network according to any of claims 1 to 6, characterised in that the switching elements of at least one stage are asymmetric, each implementing an expansion of the traffic entering the stage, reducing the cell traffic load of the outlets of these switching elements with respect to their inlets.

8. Switching network according to any of claims 1 to 6, characterised in that the switching elements of at least one stage are asymmetric, each implementing a concentration of traffic leaving the stage, increasing the cell traffic load of the outlets of these switching elements with respect to their inlets.

9. Switching network according to claims 7 and 8, characterised in that the expansion is implemented by at least one of the first stages (TSi1, ...) and the concentration by at least one of the last stages (TSo1, ...), thereby achieving a reduction in the traffic load within the switching network between these two types of asymmetric switching stages.

10. Switching network according to claim 9, characterised in that the expansion rate in at least one of the first stages is exactly compensated for by the concentration rate in at least one of the last stages, thereby implementing a symmetrical switching network having the same number of input and output ports.

11. Network according to any of claims 1 to 6, characterised in that the switching elements of all the stages are symmetrical, having the same number of inlets and outlets, and in that the switching network is therefore also symmetrical, having the same number of input ports and output ports.

12. Switching network according to any of claims 5 to 11, characterised in that the switching elements (ISE, fig. 3) of at least certain stages of a multiple stage switching network route cells belonging to two opposing traffic streams, in that, in each of these switching elements called bidirectional switching elements, the inlets are divided into two sets (I1, ..., I16; I17, ..., I32) of inlets and the outlets into two sets (O1, ..., O16; O17, ..., O32) of outlets, one traffic stream normally being routed from a first set of inlets to a first set of outlets and the other traffic stream from a second set of inlets to a second set of outlets, and in that the interpretation of the routing information in the switching element takes account of the traffic stream (IO, fig. 4) to which it relates.

13. Switching network according to any of claims 4 to 11, characterised in that the switching elements of all the stages of the switching network are unidirectional, routing cells belonging to a single traffic stream routed from the inlets of each of these switching elements to their outlets.

14. Switching network according to claim 13, characterised in that it contains at least three stages, each switching element of a stage other than the last being connected by one or more links to each switching element of the following stage and each switching element of one stage other than the first being connected by one or more links to each switching element of the preceding stage.

15. Switching network according to claim 13, characterised in that it contains at least one inlet selection unit (USi, fig. 6) and at least one outlet selection unit (USo), each formed of switching elements arranged in at least two stages and in each of which each switching element of a stage other than the last is connected by one or more links to each switching element of the following stage and each switching element of a stage other than the first is connected by one or more links to each switching element of the preceding stage, the inlet selection units being disposed in tandem with the outlet selection units, the input ports being connected to the inlets of the inlet selection units and the output ports to the outlets of the outlet selection units.

16. Switching network according to claim 15, characterised in that selection units called selection planes (PS1, ..., PS16, fig. 11 or 12) each connect inlet selection unit outlets to outlet selection unit inlets.

17. Switching network according to any of claims 5 to 16, characterised in that, in the switching elements of at least one stage, one of said groups of outlets contains all the outlets of the switching element, in the case of a unidirectional switching element, or wherein all the outlets of one of the two sets of outlets for one of the two transfer directions, in the case of a bidirectional switching element, for a general distribution (DI, fig. 4) of the incoming traffic over all the outlets of this stage in the incoming transfer direction.

18. Switching network according to claim 12, characterised in that it is configured as an extensible folded network, having at least two stages at least one of which is bidirectional (fig. 7) and, when this is the case for the first stage, the input ports being connected to the inlets of said first set of inlets of the switching elements of a first stage and the output ports being connected to the outlets of said second set of outlets of these same switching elements of the first stage, the last stage being composed of unidirectional switching elements which route an incoming traffic stream to the switching elements of the preceding stage, thereby implementing a traffic reflection function.

19. Switching network according to claim 12, characterised in that it is configured as an extensible folded network, having at least three stages (fig. 9), at least one of which is bidirectional and, when this is not the case for the first stage, then consisting of two sets of counterpart unidirectional switching elements, one incoming, the other outgoing, the input ports being connected to the inlets of said set of unidirectional incoming switching elements of the first stage and the output ports being connected to the outlets of said set of unidirectional outgoing switching elements of the same first stage, the last stage being composed of unidirectional switching elements which route an incoming traffic stream to the switching elements of the preceding stage, thereby implementing a reflection function.

20. Switching network according to claim 18, characterised in that each switching element of a stage other than the last is connected by one or more links to each switching element of the following stage and each switching element of a stage other than the first is connected by one or more links to each switching element of the preceding stage.

21. Switching network according to claim 18 or 19, characterised in that it contains at least three stages (fig. 10) and in that at least the first two stages consist of inlet and outlet selection units each formed from switching elements arranged in at least two stages and in each of which each switching element of one stage other than the last is connected by one or more links to each switching element of the following stage and each switching element of one stage other than the first is connected by one or more links to each switching element of the preceding stage.

22. Switching network according to claim 21, characterised in that the inlet and outlet selection units are interconnected by at least two selection planes (PS1, ..., PS16, fig. 11, 12), each comprising an arrangement of one or more stages according to the required capacity of the switching network.

23. Switching network according to claim 22, characterised in that the increase in capacity of said extensible network is achieved by adding successive stages without altering the wiring between stages, each intermediate configuration of fewer stages using as its last equipped stage a stage of bidirectional switching elements which can implement a reflection function in the last stage of the folded network.

24. Switching network according to any of claims 4 to 12 and 18 to 23, characterised in that the switching elements of one or more of the first stages of the switching network are arranged so that, in the incoming traffic routing direction and when the routing data specifies a point-to-point routing and/or a point-to-multipoint routing, and taking into account said routing parameters, there is a general distribution (DI) of the incoming traffic.

25. Switching network according to any of the preceding claims, characterised in that, in a switching element, any cell to be transferred from one of the outlets of a selected group of outlets is provided at any of the outlets of this group.

26. Switching network according to claim 25, characterised in that said selection between the outlets of a routing group is performed in a way which balances the cell load over the different outlets of this group.

27. Switching network according to claim 24 or 26, characterised in that said selection performed in a way to balance the cell load over the different outlets of this group is based on a quasi- or pseudo-random distribution process intended to achieve a decorrelation between the distribution of cells over the inlets and the distribution of cells over the outlets of the switching element.

28. Switching network according to claim 13, characterised in that it contains two asymmetric unidirectional networks with three counterpart stages (fig. 8), the first interconnecting N1 input ports to N2 output ports, the second connecting N2 input ports to N1 output ports, juxtaposed so as to achieve the equivalent of a switching network interconnecting in both traffic directions, on one side N1 input and output ports and on the other, N2 output and input ports.

29. Switching network according to claim 12, characterised in that it contains at least three stages at least one of which is bidirectional (fig. 9), arranged to form a non-folded bidirectional network interconnecting a first set of N1 input and output ports and a second set of N2 output and input ports, in that each switching element of an internal stage is connected to the switching elements of the preceding and following stages by one or more links and each switching element of an end stage is connected on one side to the switching elements of the adjacent stage and, on the other, to one of the sets of input and output ports, and in that the cells are transferred between an input port and an output port belonging either to the two different sets of ports, through transfer across the three stages, or to the same set of ports through reflected transfer in one of the switching elements of a bidirectional stage, permitting the interconnection of these two ports.

30. Switching network according to claim 29, characterised in that it contains at least four stages (fig. 10), in that at least the first two stages, close to the set of N1 input and output ports, consist of inlet and outlet selection units (TSU1, ..., TSUm) each formed from switching elements arranged in at least two stages, in that at least one stage, close to the set of N2 input and output ports interconnects firstly, this set of N2 ports and, secondly, the selection units giving access to said N1 ports, and in that the switching elements of successive stages are interconnected by one or more links.

31. Switching network according to any of the preceding claims, characterised in that the order of the cells, likely to be modified after transfer through the switching network following different paths, is re-established by a cell order re-establishment circuit provided in each output port of the switching network.

32. Switching network according to claim 31, characterised in that relatively high speed external connections are connected to several ports of the switching network, these ports operating at lower speed, in that the incoming cells of such a high speed connection are distributed over the different input ports to which it is connected, and in that the cells intended for such a high speed outgoing connection are routed through the switching network towards the group of output ports to which is it connected, the cells of these output ports being multiplexed at the highest speed of the outgoing connection after re-establishment of the cell order over the set of output ports of the outgoing connection in question.

33. Switching network according to claim 16 or 22, characterised in that the number of said selection planes is selected on the basis of the highest cell traffic load averaged over the set of input and output ports of each selection unit, the use in the calculation exclusively of these average values being made possible by the distribution of traffic over a multiplicity of paths in each selection unit.

34. Switching network according to claim 6, characterised in that it contains switching elements which have a branch point memory (MCM) and in that the identities of the outlet groups corresponding to the branches to be performed in a switching element, when it is to operate in a point-to-multipoint routing mode are obtained by reading the branch point memory using said multicast tree internal reference number (IRN).

35. Switching network according to claim 24 or 34, characterised in that the contents of the branch point memories (MCM) of the switching elements of the different stages are marked so that only those of the switching elements effecting a selective routing contain branching indications necessary for the stage in question for the multicast tree in question, in that, consequently, no branching indication is marked in the switching elements of the stages effecting a general traffic distribution, and in that the different switching elements which belong to a set of equivalent switching elements in respect of the internal paths between stages, possess the same branch point content for each multicast tree, thereby avoiding the generation of unwanted copies of cells in the switching network.

36. Switching network according to claim 34, characterised in that said distribution tree (IRN) does not depend on the input port but only on the set of output ports to which a cell from any input port is to be transferred.

37. Switching network according to any of the preceding claims, characterised in that at least some of the switching elements are replaced by switching modules each of which is composed of several switching elements arranged so that said switching module presents at its input and output access points the characteristics and performances of a single virtual switching element of greater size in number of inlets and outlets and has the functionalities previously cited.

38. Switching network according to any of the preceding claims, characterised in that said cells are packets.

39. Switching network according to any of the preceding claims, characterised in that said cells are cells of fixed or variable length consisting of a certain number of fixed length subcells.

40. Switching network according to any of the preceding claims, characterised in that said routing information associated (CCH) with the cell is contained in the cell itself.

**Patentansprüche**

1. Vermittlungsnetz mit selbsttätiger Leitwegbestimmung für Zellen und mit Mehrfachleitwegen für die Durchschaltung von Zellen im asynchronen Zeitmultiplexmodus,

- mit Eingangsports,
- mit Ausgangsports,
- mit Elementarschaltern (TSi1, ..., AS1, ..., TSo1, ...), die in mehreren Stufen von miteinander verbundenen Elementarschaltern angeordnet sind,
- wobei jeder Elementarschalter Eingänge (I1 ...) und Ausgänge (01 ...) besitzt und eine Zelle einer festen oder variablen Länge, die an einem seiner Eingänge ankommt, auf einen oder mehrere seiner Ausgänge abhängig von Durchschaltungsinformationen (CCH) übertragen kann, die der Zelle zugeordnet sind,
- wobei die Eingangsports des Netzes den Eingängen der Elementarschalter einer ersten Stufe und die Ausgangsports des Netzes den Ausgängen der Elementarschalter einer letzten Stufe entsprechen, dadurch gekennzeichnet,
- daß jeder Elementarschalter mindestens einer Stufe des Netzes mindestens drei Ausgänge aufweist,
- daß diese Ausgänge in Gruppen zusammengefaßt sind,
- daß eine Gruppe von Ausgängen einen oder mehrere bestimmte Ausgänge aufweist,
- daß abhängig von einer an einem beliebigen der Eingänge empfangenen Zelle zugeordneten Durchschaltungsdaten (IRN, RCA, RCC) der Elementarschalter zur Identifizierung (RMD) einer eine oder mehrere Gruppen von Ausgängen enthaltenden Einheit ausgebildet ist,
- daß der Elementarschalter zur Übertragung der empfangenen Zelle auf einen Ausgang geeignet ist, der unter den Ausgängen der einzigen Gruppe der Einheit ausgewählt ist, oder auf Ausgänge, und zwar einen je Gruppe der Einheit, die jeweils unter den Ausgängen einer Gruppe ausgewählt ist.

2. Vermittlungsnetz nach Anspruch 1, dadurch gekennzeichnet, daß die Elementarschalter von mindestens zwei Stufen (TS1 ...; AS1 ...) die Merkmale gemäß dem kennzeichnenden Teil des Anspruchs 1 enthalten, daß die Anordnung der Ausgänge in Gruppen nicht unbedingt in jeder der zumindest zwei Stufen dieselbe ist und daß die Schalter jeder dieser Stufen so ausgebildet sind, daß sie je eigene Durchschaltungsparameter (RCCTM) speichern, die von einer Positionsangabe abhängig von der Stufe abgeleitet sind, in der der Schalter sich befindet, wobei diese verschiedenen Parameter unterschiedliche Betriebsweisen in den Elementarschaltern der beiden betrachteten Stufen hervorrufen.

3. Vermittlungsnetz nach Anspruch 1, dadurch gekennzeichnet, daß die Elementarschalter von mindestens zwei Stufen (TS1 ...; AS1 ...) die Merkmale gemäß dem kennzeichnenden Teil des Anspruchs 1 enthalten, daß die Anordnung der Ausgänge in Gruppen nicht unbedingt in jeder der zumindest zwei Stufen dieselbe ist und daß die Schalter jeder dieser Stufen so ausgebildet sind, daß sie je eigene Durchschaltungsparameter (RCCTM) speichern, die von einer Positionsangabe bezüglich der Stufe, in der der Schalter sich befindet, und der Lage in der Stufe abgeleitet sind, wobei diese verschiedenen Parameter unterschiedliche Betriebsweisen in den Elementarschaltern der beiden betrachteten Stufen hervorrufen.

4. Vermittlungsnetz nach Anspruch 2 oder 3, dadurch gekennzeichnet, daß die Durchschaltungsinformationen (CCH) in jeder Stufe so interpretiert werden, daß sie den Modus (MT) der Übertragung einer empfangenen Zelle an die Ausgänge des Elementarschalters bestimmen, und daß diese Interpretation abhängig von den Durchschaltungsparametern erfolgt.

5. Vermittlungsnetz nach einem beliebigen der Ansprüche 1 bis 4, dadurch gekennzeichnet, daß die Elementarschalter zumindest mancher Stufen des Netzes Mittel aufweisen, um die Durchschaltungsinformationen zu interpretieren, die sich in einem Leitwegetikett (CCH) einer Zelle befinden und einen Steuerkode für die Durchschaltung (RCC), der die erforderliche Übertragungssequenz für die Zelle durch das Vermittlungsnetz definiert, eine Adresse (RCA) des Ausgangsports für eine Durchschaltung von einem Punkt zu einem Punkt und/oder eine interne Bezugsnummer (IRN) des Diffusionsbaums für die Durchschaltung von einem Punkt zu mehreren Punkten aufweisen.

6. Vermittlungsnetz nach Anspruch 5, dadurch gekennzeichnet, daß die betrachteten Elementarschalter den Durchschaltungs-Steuerkode (RCC) abhängig von den Durchschaltungsparametern interpretieren und daraus einen Durchschaltungsmodus (MT) ableiten, der unter anderen ein Modus der Durchschaltung von einem Punkt zu einem Punkt (RS) oder ein Modus der Durchschaltung von einem Punkt zu mehreren Punkten (MC) sein kann.

7. Vermittlungsnetz nach einem beliebigen der Ansprüche 1 bis 6, dadurch gekennzeichnet, daß die Elementarschalter mindestens einer Stufe unsymmetrisch sind und je eine Expansion des in der Stufe ankommenden Verkehrs durchführen, so daß die Verkehrsbelastung der Ausgänge dieser Elementarschalter bezüglich ihrer Eingänge verringert wird.

8. Vermittlungsnetz nach einem beliebigen der Ansprüche 1 bis 6, dadurch gekennzeichnet, daß die Elementarschalter mindestens einer Stufe unsymmetrisch sind und je eine Konzentration des ausgehenden Verkehrs der Stufe durchführen und damit die Verkehrsbelastung der Ausgänge dieser Elementarschalter bezüglich ihrer Eingänge erhöhen.

9. Vermittlungsnetz nach den Ansprüchen 7 und 8, dadurch gekennzeichnet, daß die Expansion durch mindestens eine der ersten Stufen (TSi1 ...) und die Konzentration durch mindestens eine der letzten Stufen (TSo1 ...) erfolgt, wodurch sich eine Verringerung der Verkehrsbelastung innerhalb des Vermittlungsnetzes zwischen diesen beiden Stufen von unsymmetrischen Schaltern ergibt.

10. Vermittlungsnetz nach Anspruch 9, dadurch gekennzeichnet, daß der Expansionsgrad in mindestens einer der ersten Stufen genau durch den Konzentrationsgrad in mindestens einer der letzten Stufen kompensiert wird, so daß sich ein symmetrisches Vermittlungsnetz mit gleicher Anzahl von Eingangs- und Ausgangsports ergibt.

11. Vermittlungsnetz nach einem beliebigen der Ansprüche 1 bis 6, dadurch gekennzeichnet, daß die Elementarschalter aller Stufen symmetrisch sind und die gleiche Anzahl von Eingängen und Ausgängen besitzen und daß das Vermittlungsnetz damit ebenfalls symmetrisch ist und die gleiche Anzahl von Eingangs- und Ausgangsports aufweist.

12. Vermittlungsnetz nach einem beliebigen der Ansprüche 5 bis 11, dadurch gekennzeichnet, daß die Elementarschalter (ISE, Figur 3) von zumindest manchen Stufen eines mehrstufigen Vermittlungsnetzes Zellen übertragen, die zwei entgegengesetzt gerichteten Verkehrsströmen angehören, daß in jedem der Elementarschalter, die bidirektionale Schalter genannt werden, die Eingänge in zwei Gruppen von Eingängen (I1 ..., I16; I17 ... I32) und die Ausgänge ebenfalls in zwei Gruppen von Ausgängen (O1 ... O16; O17 ... O32) unterteilt sind, wobei ein Verkehrsstrom normalerweise von einer ersten Gruppe von Eingängen an eine erste Gruppe von Ausgängen und der andere Verkehrsstrom von einer zweiten Gruppe von Eingängen zu einer zweiten Gruppe von Ausgängen gelangt, und daß die Interpretation der Durchschaltungsinformationen in dem Elementarschalter die Richtung des Verkehrsstroms (I0, Figur 4) berücksichtigt, zu dem sie gehören.

13. Vermittlungsnetz nach einem beliebigen der Ansprüche 4 bis 11, dadurch gekennzeichnet, daß die Elementarschalter aller Stufen des Vermittlungsnetzes unidirektional, d.h. in einer Richtung wirksam sind und Zellen übertragen, die einem einzigen Verkehrsstrom angehören und von den Eingängen jedes dieser Elementarschalter zu ihren Ausgängen übertragen werden.

14. Vermittlungsnetz nach Anspruch 13, dadurch gekennzeichnet, daß es mindestens drei Stufen enthält und daß jeder Elementarschalter einer Stufe mit Ausnahme der letzten über eine oder mehrere Maschen mit jedem Elementarschalter der nächstfolgenden Stufe verbunden ist, während jeder Elementarschalter einer Stufe mit Ausnahme der ersten über eine oder mehrere Maschen mit jedem Elementarschalter der vorhergehenden Stufe verbunden ist.

15. Vermittlungsnetz nach Anspruch 13, dadurch gekennzeichnet, daß es mindestens eine Eingangs-Selektionseinheit (USi, Figur 6) und mindestens eine Ausgangs-Selektionseinheit (USr) aufweist, die je aus in mindestens zwei Stufen angeordneten Elementarschaltern bestehen, wobei in jeder Einheit jeder Schalter einer Stufe mit Ausnahme der letzten über eine oder mehrere Maschen mit jedem Elementarschalter der nächstfolgenden Stufe und jeder Elementarschalter einer Stufe mit Ausnahme der ersten über eine oder mehrere Maschen mit jedem Elementarschalter der vorhergehenden Stufe verbunden ist, wobei die Eingangs-Selektionseinheiten mit den Ausgangs-Selektionseinheiten gepaart angeordnet sind und die Eingangsports an die Eingänge der Eingangs-Selektionseinheiten und die Ausgangsports an die Ausgänge der Ausgangs-Selektionseinheiten angeschlossen sind.

16. Vermittlungsnetz nach Anspruch 15, dadurch gekennzeichnet, daß Selektionseinheiten, die Selektionsebenen genannt werden (PS1 ... PS16, Figur 11 oder 12) je Ausgänge einer Eingangs-Selektionseinheit mit Eingängen einer Ausgangs-Selektionseinheit verbinden.

17. Vermittlungsnetz nach einem beliebigen der Ansprüche 5 bis 16, dadurch gekennzeichnet, daß in den Elementarschaltern mindestens einer Stufe eine der Gruppen von Ausgängen alle Ausgänge des Elementarschalters im Fall eines unidirektionalen Elementarschalters oder alle Ausgänge einer der beiden Gruppen von Ausgängen für eine der beiden Übertragungsrichtungen im Fall eines bidirektionalen Elementarschalters für eine allgemeine Verteilung (DI, Figur 4) des ankommenden Verkehrs auf alle Ausgänge dieses Schalters in Richtung der ankommenden Übertragung aufweist.

18. Vermittlungsnetz nach Anspruch 12, dadurch gekennzeichnet, daß es als gefaltetes, erweiterbares Netz konfiguriert ist und mindestens zwei Stufen besitzt, von denen mindestens eine bidirektional ist (Figur 7), wobei, wenn dies für die erste Stufe gilt, die Eingangsports an die Eingänge der ersten Gruppe von Eingängen der Elementarschalter einer ersten Stufe und die Ausgangsports an die Ausgänge der zweiten Gruppe von Ausgängen dieser selben Elementarschalter der ersten Stufe angeschlossen sind, während die letzte Stufe aus unidirektionalen Elementarschaltern gebildet wird, die einen ankommenden Verkehrsstrom an die Schalter der vorhergehenden Stufe weiterleiten und so eine Verkehrsreflexion durchführen.

19. Vermittlungsnetz nach Anspruch 12, dadurch gekennzeichnet, daß es als erweiterbares, gefaltetes Netz mit mindestens drei Stufen (Figur 9) ausgebildet ist, von denen mindestens eine bidirektional ist und, wenn dies nicht für die erste Stufe gilt, aus zwei Gruppen von einander entsprechenden, unidirektionalen Schaltern gebildet wird, nämlich einer ankommenden und einer ausgehenden Gruppe, wobei die Eingangsports an die Eingänge der Gruppe von unidirektionalen Eingangsschaltern der ersten Stufe und die Ausgangsports an die Ausgänge der Gruppe von unidirektionalen Ausgangsschaltern der gleichen ersten Stufe angeschlossen sind, während die letzte Stufe aus unidirektionalen Elementarschaltern gebildet wird, die einen ankommenden Verkehrsstrom an die Schalter der vorhergehenden Stufe zurückübertragen, wodurch sich eine Reflexion ergibt.

20. Vermittlungsnetz nach Anspruch 18, dadurch gekennzeichnet, daß jeder Elementarschalter einer Stufe mit Ausnahme der letzten über eine oder mehrere Maschen an jeden Elementarschalter der nächstfolgenden Stufe und jeder Elementarschalter einer Stufe mit Ausnahme der ersten über eine oder mehrere Maschen mit jedem Elementarschalter der vorhergehenden Stufe verbunden ist.

21. Vermittlungsnetz nach Anspruch 18 oder 19, dadurch gekennzeichnet, daß es mindestens drei Stufen (Figur 10) besitzt und daß zumindest die beiden ersten Stufen aus Eingangs- und Ausgangs-Selektionseinheiten gebildet werden, die je aus in mindestens zwei Stufen angeordneten Elementarschaltern bestehen und in denen jeder Elementarschalter einer Stufe mit Ausnahme der letzten über eine oder mehrere Maschen mit jedem Elementarschalter der nächstfolgende Stufe und jeder Elementarschalter einer Stufe mit Ausnahme der ersten über eine oder mehrere Maschen mit jedem Elementarschalter der vorhergehenden Stufe verbunden ist.

22. Vermittlungsnetz nach Anspruch 21, dadurch gekennzeichnet, daß die Eingangs- und Ausgangs-Selektionseinheiten über mindestens zwei Selektionsebenen (PS1 ... PS16, Figuren 11 und 12) miteinander verbunden sind und je eine Gruppe von einer oder mehreren Stufen je nach der gewünschten Kapazität für das Vermittlungsnetz besitzen.

23. Vermittlungsnetz nach Anspruch 22, dadurch gekennzeichnet, daß die Erhöhung der Kapazität des erweiterbaren Netzes durch aufeinanderfolgende Hinzufügung von Stufen ohne Veränderung der Verdrahtung zwischen den Stufen erfolgt, wobei jede Zwischenkonfiguration mit einer geringeren Anzahl von Stufen als letzte Stufe eine Stufe von bidirektionalen Elementarschaltern verwendet, die eine Reflexion der letzten Stufe des gefalteten Netzes durchführen können.

24. Vermittlungsnetz nach einem beliebigen der Ansprüche 4 bis 12 und 18 bis 23, dadurch gekennzeichnet, daß die Elementarschalter von einer oder mehreren der ersten Stufen des Vermittlungsnetzes so ausgebildet sind, daß sich eine allgemeine Verteilung (DI) des ankommenden Verkehrs in der Durchschaltungsrichtung entsprechend dem ankommenden Verkehr ergibt, wenn die Durchschaltungsdaten eine Durchschaltung von einem Punkt zu einem Punkt und/oder von einem Punkt zu mehreren Punkten fordern und unter Berücksichtigung der Durchschaltungsparameter.

**25.** Vermittlungsnetz nach einem beliebigen der vorhergehenden Ansprüche, dadurch gekennzeichnet, daß in einem Elementarschalter jede Zelle, die an einen der Ausgänge einer ausgewählten Gruppe von Ausgängen übertragen werden soll, an einen beliebigen der Ausgänge dieser Gruppe geliefert wird.

**26.** Vermittlungsnetz nach Anspruch 25, dadurch gekennzeichnet, daß die Selektion zwischen den Ausgängen einer Durchschaltungsgruppe so erfolgt, daß die Verkehrsbelastung auf den verschiedenen Ausgängen dieser Gruppen sich ausgleicht.

**27.** Vermittlungsnetz nach Anspruch 24 oder 26, dadurch gekennzeichnet, daß die Selektion, die so erfolgt, daß die Verkehrsbelastung auf die verschiedenen Ausgänge dieser Gruppe verteilt wird, auf einem quasi- oder pseudozufälligen Verteilungsprozeß beruht, der eine Dekorrelation zwischen dem Fluß der Zellen auf den Eingängen und dem Fluß der Zellen auf den Ausgängen des Elementarschalters anstrebt.

**28.** Vermittlungsnetz nach Anspruch 13, dadurch gekennzeichnet, daß es zwei unidirektionale unsymmetrische Netze mit drei homologen Stufen (Figur 8) enthält, wobei die erste Stufe N1 Eingangsports mit N2 Ausgangsports und die zweite Stufe N2 Eingangsports mit N1 Ausgangsports verbindet und wobei die Netze parallel liegen und das Äquivalent eines Vermittlungsnetzes bilden, das in beiden Verkehrsrichtungen wirksam ist, nämlich von einer Seite N1 Eingangsports und Ausgangsports und von der anderen Seite N2 Ausgangsports und Eingangsports verbindet.

**29.** Vermittlungsnetz nach Anspruch 12, dadurch gekennzeichnet, daß es mindestens drei Stufen enthält, von denen mindestens eine bidirektional ist (Figur 9), so daß sich ein bidirektionales ungefaltetes Netz ergibt, das eine erste Gruppe von N1 Eingangs- und Ausgangsports und eine zweite Gruppe von N2 Ausgangs- und Eingangsports miteinander verbindet, daß jeder Elementarschalter einer inneren Stufe an die Elementarschalter der vorhergehenden und nachfolgenden Stufe über eine oder mehrere Maschen verbunden ist und jeder Elementarschalter einer Endstufe einerseits an die Elementarschalter der benachbarten Stufe und andererseits an eine der Gruppen von Eingangs- und Ausgangsports angeschlossen ist, und daß die Zellen zwischen einem Eingangsport und einem Ausgangsport entweder durch Übertragung über die drei Stufen durchgeschaltet werden, wenn diese Ports zwei unterschiedlichen Gruppen von Ports angehören, oder durch reflektierte Übertragung in einem der Elementarschalter einer bidirektionalen Stufe durchgeschaltet werden, wenn diese Ports einer gleichen Gruppe von Ports angehören, so daß eine Verbindung dieser beiden Ports möglich wird.

**30.** Vermittlungsnetz nach Anspruch 29, dadurch gekennzeichnet, daß es mindestens vier Stufen (Figur 10) besitzt, daß zumindest die beiden ersten Stufen in der Nähe der Gruppe von N1 Eingangs- und Ausgangsports aus Eingangs- und Ausgangs-Selektionseinheiten (TSU1 ...., TSUm) bestehen, die je Elementarschalter in einer mindestens zweistufigen Konfiguration enthalten, daß mindestens eine Stufe in der Nähe der Gruppe von N2 Eingangs- und Ausgangsports einerseits diese Gruppe von N2 Ports und andererseits die Selektionseinheiten miteinander verbindet, die Zugang zu den N1 Ports verschaffen, und daß die Elementarschalter aufeinanderfolgender Stufen über eine oder mehrere Maschen miteinander verbunden sind.

**31.** Vermittlungsnetz nach einem beliebigen der vorhergehenden Ansprüche, dadurch gekennzeichnet, daß die Reihenfolge von Zellen, die nach der Durchschaltung im Vermittlungsnetz gemäß unterschiedlichen Leitwegen verändert sein kann, durch eine Schaltung zur Wiederherstellung der Reihenfolge der Zellen wiedergewonnen wird, die in jedem Ausgangsport des Vermittlungsnetzes vorgesehen ist.

**32.** Vermittlungsnetz nach Anspruch 31, dadurch gekennzeichnet, daß äußere Verbindungen mit relativ hohem Durchsatz an mehrere Ports des Vermittlungsnetzes angeschlossen sind, wobei diese Ports mit geringerem Durchsatz arbeiten, daß die von einer solchen Verbindung ankommenden Zellen mit hohem Durchsatz auf die verschiedenen Eingangsports verteilt werden, an die sie angeschlossen sind, und daß die Zellen, die für eine solche ausgehende Verbindung mit hohem Durchsatz bestimmt sind, im Vermittlungsnetz zu der Gruppe von Ausgängen durchgeschaltet werden, an die diese Verbindung angeschlossen ist, wobei die Zellen dieser Ausgangsports auf den höheren Durchsatz der ausgehenden Verbindung nach Wiederherstellung der Reihenfolge der Zellen über die Gesamtheit der Ausgangsports der betrachteten ausgehenden Verbindung multiplexiert werden.

**33.** Vermittlungsnetz nach Anspruch 16 oder 22, dadurch gekennzeichnet, daß die Anzahl der Selektionsebenen abhängig von der höchsten über die Gesamtheit der Eingangs- und Ausgangsports jeder Selektionseinheit gemittelten Verkehrsbelastung dimensioniert ist, wobei die Berücksichtigung nur dieser gemittelten Werte durch die Verteilung des Verkehrs auf eine Vielzahl von Leitwegen in jeder Selektionseinheit möglich geworden ist.

**34.** Vermittlungsnetz nach Anspruch 6, dadurch gekennzeichnet, daß es Elementarschalter mit einem Speicher für Verzweigungspunkte (MCM) besitzt und daß die Identität der Gruppen von Ausgängen entsprechend den im Elementarschalter durchzuführenden Verzweigungen, wenn dieser eine Durchschaltung von einem Punkt zu mehreren Punkten durchführen soll, durch Auslesen des Verzweigungspunktspeichers mit Hilfe der internen Bezugsnummer des Diffusionsbaums (IRN) erhalten wird.

**35.** Vermittlungsnetz nach Anspruch 24 oder 34, dadurch gekennzeichnet, daß der Inhalt der Speicher für die Verzweigungspunkte (MCM) der Elementarschalter in den verschiedenen Stufen so markiert ist, daß nur diejenigen Elementarschalter, die eine selektive Durchschaltung durchführen, in der betreffenden Stufe für den betreffenden Diffusionsbaum erforderliche Verzweigungsangaben enthalten, daß daher keine Verzweigungsangabe in den Elementarschaltern der Stufen markiert ist, die eine allgemeine Verteilung des Verkehrs durchführen und daß die verschiedenen Elementarschalter, die einer Gruppe von hinsichtlich der internen Leitwege zwischen Stufen äquivalenten Elementarschaltern angehören, den gleichen Inhalt der Verzweigungspunktspeicher für jeden Diffusionsbaum besitzen, so daß die Erzeugung von unnötigen Kopien von Zellen im Vermittlungsnetz vermieden wird.

**36.** Vermittlungsnetz nach Anspruch 34, dadurch gekennzeichnet, daß der Diffusionsbaum (IRN) nicht vom Eingangsport, sondern nur von der Gruppe von Ausgangsports abhängt, auf die eine von einem beliebigen Eingangsport kommende Zelle übertragen werden soll.

**37.** Vermittlungsnetz nach einem beliebigen der vorhergehenden Ansprüche, dadurch gekennzeichnet, daß mindestens ein Teil der Elementarschalter durch Schaltmoduln ersetzt wird, die je aus mehreren Elementarschaltern bestehen, die so angeordnet sind, daß der Schaltmodul in Höhe seiner Eingangs- und Ausgangs zugänge die Merkmale und Eigenschaften eines virtuellen einzigen Elementarschalters mit einer größeren Anzahl von Eingängen und Ausgängen besitzt und über die oben zitierten Funktionalitäten verfügt.

**38.** Vermittlungsnetz nach einem beliebigen der vorhergehenden Ansprüche, dadurch gekennzeichnet, daß die Zellen Pakete sind.

**39.** Vermittlungsnetz nach einem beliebigen der vorhergehenden Ansprüche, dadurch gekennzeichnet, daß die Zellen Zellen fester Länge oder Zellen variabler Länge sind, die aus einer gewissen Anzahl von Unterzellen fester Länge zusammengesetzt sind.

**40.** Vermittlungsnetz nach einem beliebigen der vorhergehenden Ansprüche, dadurch gekennzeichnet, daß die Durchschaltungsinformationen (CCH), die der Zelle zugeordnet sind, in der Zelle selbst enthalten sind.

FIG.1

EP 0 446 540 B1

FIG. 2

CCH

| IRN | RCA | RCC |
|-----|-----|-----|

SCH

| 11 | CCH | DB1 | FSC |
|----|-----|-----|-----|

| 00 | DB2 | ISC |
|----|-----|-----|

| 00 | DBs-1 | ISC |
|----|-------|-----|

| 01 | DBs | UNSD | LSC |
|----|-----|------|-----|

# FIG.3

FIG. 3bis

# FIG.4

# FIG.4bis

FIG.5

TSi1  AS1  TSo1  RC1

$N = n \times T$

$N = n \times T$

TSiT  ASk  TSoT

FIG.6

TSo1  ASo1  USo

TSoT

ASok

USi  TSi1

$N = n \times T$

ASi1

TSiT  ASik

FIG.7

TS1  AS1

$N = n \times T$

TST  ASk

## FIG.8

N1=T1×n

N2=T2×n

## FIG.9

N1

N2

## FIG.10

N1

N2

# FIG.11

EP 0 446 540 B1

# FIG.12